# EUROPÄISCHE PATENTSCHRIFT

(11) **EP 3 297 774 B1**
(45) Veröffentlichungstag und Bekanntmachung des Hinweises auf die Patenterteilung: **24.06.2026**
(21) Anmeldenummer: 16723752.8
(22) Anmeldetag: 19.05.2016
(51) Int. Cl.: B06B 1/06, G01S 15/89, G01S 7/52

(54) **AKUSTISCHE WANDLERVORRICHTUNG MIT EINEM PIEZO-SCHALLWANDLER UND EINEM MUT-SCHALLWANDLER, VERFAHREN ZUM BETRIEB DERSELBEN**
ACOUSTIC TRANSDUCER DEVICE COMPRISING A PIEZO SOUND TRANSDUCER AND A MICROMACHINED ULTRASONIC TRANSDUCER (MUT), METHOD FOR OPERATING SAME
ENSEMBLE TRANSDUCTEUR ACOUSTIQUE COMPRENANT UN TRANSDUCTEUR ACOUSTIQUE PIÉZOÉLECTRIQUE ET UN TRANSDUCTEUR ACOUSTIQUE MUT, PROCÉDÉ DE FONCTIONNEMENT DE CEUX-CI

(30) Priorität: 22.05.2015 DE 102015209485
(43) Veröffentlichungstag der Anmeldung: 28.03.2018
(73) Patentinhaber: Fraunhofer-Gesellschaft zur Förderung der angewandten Forschung e.V., 80686 München (DE)
(72) Erfinder: KLEMM, Markus, 01129 Dresden (DE); UNAMUNO, Anartz, 01109 Dresden (DE)
(74) Vertreter: Hersina, Günter
(86) Internationale Anmeldenummer: PCT/EP2016/061296
(87) Internationale Veröffentlichungsnummer: WO 2016/188860

(56) Entgegenhaltungen:
- JP-A- H06 148 154
- US-A1- 2007 167 752
- US-A1- 2009 082 673

## Beschreibung

Die vorliegende Erfindung bezieht sich auf eine akustische Wandlervorrichtung, wie sie beispielsweise für akustisch bildgebende Verfahren einsetzbar ist, auf ein Verfahren zum Betrieb der akustischen Wandlervorrichtung, auf ein akustisches System, auf eine akustische Koppelstruktur und auf ein Verfahren zum Herstellen einer akustischen Koppelstruktur. Die vorliegende Erfindung bezieht sich ferner auf Ultraschallwandler aus Piezo- und mikromaschinell gefertigten Ultraschallwandlern.

Herkömmliche Ultraschallwandler auf Basis eines Piezo-Materials oder Piezo-Komposits (im Folgenden als Piezo bezeichnet) besitzen eine sehr hohe akustische Impedanz. Dadurch sind sie in der Lage, hohe Schalldrücke zu erzeugen, zeigen jedoch Nachteile in der Empfangsempfindlichkeit. Außerdem ist es nur schwer oder gar nicht möglich, diese Wandler als Array-Wandler bei hohen Frequenzen, etwa bei Frequenzen von größer 30 MHz, aufzubauen, wie es beispielsweise in [1] beschrieben ist. Für hochauflösende akustische bildgebende Verfahren ist dies jedoch von enormer Bedeutung.

Ferner sind biegbare PVDF-basierte Ultraschallwandler oder Ultraschallwandlerfolien bekannt (PVDF = Polyvinylidenfluorid) aus [2] bekannt, die eine geringere akustische Impedanz aufweisen. Sie stellen bezüglich Haltbarkeit und elektrischer Kontaktierung als Array-Element eine Herausforderung dar und weisen eine geringe Schall-Sendeleistung auf.

Mikromaschinell gefertigte Ultraschallwandler (MUT, micromachined ultrasonic transducers) können effizient als Array integriert werden und weisen eine geringe akustische Impedanz auf. Dies ist der Grund, warum sie Schwächen als Schallsender, aber sehr hohe Empfindlichkeiten als Schallempfänger aufweisen.

Bisher wird (unter anderem für akustisch bildgebende Verfahren) im Ultraschallbereich der gleiche Wandlertyp zum Senden und Empfangen von Schall verwendet. Für hohe Frequenzen, etwa in der Ultraschallmikroskopie, sind Ein-Element-Ultraschallwandler bekannt, die mechanisch geschwenkt werden, um ein Bild zu generieren.

In US 2009/082673 A1 ist ein Wandler beschrieben, der sowohl piezoelektrische als auch CMUT-Wandlerschichten enthält.

In US 2007/167752 A1 ist für die dreidimensionale Ultraschallbildgebung eine synthetische Sendeöffnung beschreiben. Ein Wandler kann separate Sende- und Empfangselemente aufweisen. Es werden breite Strahlen übertragen, was weniger Sendeelemente und / oder ein schnelleres Scannen ermöglicht.

In JP H06 148154 A ist ein Konzept zum Empfang von Ultraschallwellen bei hohem Rauschabstand. Beschrieben indem ein sendendes piezoelektrisches Element, das aus einem piezoelektrischen Material mit einem großen elektromechanischen Kopplungskoeffizienten wie PZT besteht, an der oberen Endfläche 20a einer akustischen Linse vorgesehen wird.

Wünschenswert wäre demnach ein Konzept für eine effiziente akustische Wandlervorrichtung.

Die Aufgabe der vorliegenden Erfindung besteht deshalb darin, eine akustische Wandlervorrichtung, ein Verfahren zum Betrieb derselben, ein akustisches System, eine akustische Koppelstruktur und ein Verfahren zum Herstellen desselben zu schaffen, so dass Schallwellen effizient erzeugt und effizient empfangen werden können.

Diese Aufgabe wird durch den Gegenstand der unabhängigen Patentansprüche gelöst.

Der Kerngedanke der vorliegenden Erfindung besteht darin, erkannt zu haben, dass eine funktionale Trennung von Sendeschallwandlern und Empfangsschallwandlern sowie eine unterschiedliche Ausgestaltung der beiden Schallwandler eine effiziente Aussendung von Schallwellen und ein effizientes Empfangen von Schallwellen ermöglicht. Der Effizienzgewinn kann so hoch erhalten werden, dass eventuelle Nachteile, die sich beispielsweise durch die funktionelle und räumliche Trennung von Sendewandler und Empfangswandlern ergeben könnten, mehr als kompensiert werden.

Gemäß der Erfindung umfasst eine akustische Wandlervorrichtung einen Piezo-Schwallwandler, der ausgebildet ist, um basierend auf einem Ansteuersignal eine erste Schallwelle in eine Abstrahlrichtung auszusenden. Die akustische Wandlervorrichtung umfasst ferner einen MUT-Schallwandler (MUT = micro machined ultrasonic transducer, mikromaschinell gefertigter Ultraschallwandler), der ausgebildet ist, um basierend auf einer zweiten, aus einer Empfangsrichtung empfangenen Schallwelle ein Ausgangssignal bereitzustellen. Vorteilhaft an diesem Ausführungsbeispiel ist, dass mittels des Piezo-Schallwandlers die erste Schallwelle effizient erzeugt werden kann und mittels des MUT-Schallwandlers die zweite Schallwelle mit einer hohen Empfindlichkeit, d. h. effizient, empfangen werden kann. Die funktionelle Aufteilung ermöglicht somit die Umgehung der bisherigen Nachteile. Die akustische Wandlervorrichtung ist so ausgestaltet, dass eine Innenabmessung des MUT-Schallwandlers größer ist als eine Außenabmessung des Piezo-Schallwandlers. Der Piezo-Schallwandler und der MUT-Schallwandler sind so angeordnet, dass der MUT-Schallwandler den Piezo-Schallwandler umschließt, wenn ein Ort des Piezo-Schallwandlers und ein Ort des MUT-Schallwandler in eine Ebene projiziert werden.

Gemäß einem weiteren Ausführungsbeispiel ist der MUT-Schallwandler entlang der Abstrahlrichtung des Piezo-Schallwandlers angeordnet. Vorteilhaft an diesem Ausführungsbeispiel ist, dass beide Schallwandler für eine Sendefunktion und/oder eine Empfangsfunktion nutzbar sind.

Gemäß einem weiteren Beispiel, welches nicht Teil der Erfindung darstellt, sind der Piezo-Schallwandler und der MUT-Schallwandler akustisch miteinander gekoppelt, so dass der MUT-Schallwandler durch ein Aussenden der ersten Schallwelle durch den Piezo-Schallwandler direkt angeregt wird. Vorteilhaft an diesem Ausführungsbeispiel ist, dass basierend auf dem Ausgangssignal eine Information über einen Betrieb des Piezo-Schallwandlers erhalten werden kann, etwa zu Kalibrierungszwecken.

Gemäß einem weiteren Ausführungsbeispiel umfasst die akustische Wandlervorrichtung eine akustische Linse, die ausgebildet ist, um eine Ausbreitung der ersten Schallwelle zu beeinflussen, wobei der MUT-Schallwandler mit der akustischen Linse mechanisch verbunden ist, so dass die von dem Piezo-Schallwandler ausgesendete und von der akustischen Linse beeinflusste erste Schallwelle auf den MUT-Schallwandler trifft und von dem MUT-Schallwandler in ein Medium gekoppelt wird. Vorteilhaft an diesem Ausführungsbeispiel ist, dass mittels der akustischen Linse eine akustische Strahlführung zumindest der ausgesendeten ersten Schallwelle ermöglicht ist, beispielsweise um eine Fokussierung oder eine Streuung der Schallwelle zu ermöglichen.

Gemäß einem weiteren Beispiel, welches nicht Teil der Erfindung darstellt, sind der Piezo-Schallwandler und der MUT-Schallwandler in einem Stapel fest miteinander verbunden sind, wobei durch eine Bewegung eines Elementes des Piezo-Schallwandlers oder des MUT-Schallwandlers eine Bewegung in einem Element des anderen Schallwandlers bewirkbar ist. Vorteilhaft daran ist, dass ein wechselseitig beeinflussender (beispielsweise verstärkender oder dämpfender) Betrieb der Schallwandler ermöglicht ist. Dadurch kann ein entstehender Absolutschalldruck und/oder eine Bandbreite von beiden Schallwandlern ausgesendeten Schallwellen beeinflusst werden.

Gemäß der vorliegenden Erfindung sind der Piezo-Schallwandler und der MUT-Schallwandler so angeordnet, dass der MUT-Schallwandler den Piezo-Schallwandler umschließt, wenn ein Ort des Piezo-Schallwandlers und ein Ort des MUT-Schallwandler in eine Ebene projiziert werden. Vorteilhaft an diesem Ausführungsbeispiel ist, dass der Aufbau mit einfachen Mitteln realisiert werden kann. Darüber hinaus können Punkte oder Bereiche, in denen ein natürlicher, d.h., von einer Steuerung unbeeinflusster, Fokus beider Schallwandler angeordnet ist, auf einer Linie angeordnet sein. eine hohe Flächeneffizienz der Vorrichtung erzielbar ist.

Gemäß einem weiteren Ausführungsbeispiel weist die akustische Wandlervorrichtung eine Vielzahl von Schallwandlern, d. h. zumindest einen zweiten Piezo-Schallwandler oder zumindest einen zweiten MUT-Schallwandler auf, wobei die Schallwandler bezüglich ihres Typs alternierend angeordnet sind, d. h. dass die Mehrzahl von Piezo-Schallwandlern entlang der Strecke durch den MUT-Schallwandler beabstandet sind oder dass die Mehrzahl von MUT-Schallwandlern entlang der Strecke durch den Piezo-Schallwandler beabstandet sind. Vorteilhaft daran ist, dass die Funktion Senden oder Empfangen bezüglich einer Abstrahlfläche oder einer Empfangsfläche ineinander verschoben werden können. Ferner ist vorteilhaft, dass basierend auf der Beabstandung von Elementen mit gleicher Funktion (Piezo-Schallwandler oder MUT-Schallwandler) ein Beamforming der entsprechenden Funktion effizient ausgeführt werden kann.

Gemäß einem weiteren Ausführungsbeispiel ist der Piezo-Schallwandler und/oder der MUT-Schallwandler als ein Array umfassend eine Mehrzahl von Piezo-Schallwandlerelementen oder MUT-Schallwandlerelementen gebildet. Basierend auf einzeln ansteuerbaren oder auslesbaren Elementen kann eine Richtung, aus der eine Schallwelle empfangen oder in die eine Schallwelle gesendet wird, bestimmt werden.

Gemäß einem weiteren Ausführungsbeispiel ist die Mehrzahl von Schallwandlerelementen eines Schallwandlers mechanisch miteinander fest verbunden. Vorteilhaft daran ist, dass eine von dem jeweiligen anderen Schallwandler induzierte Bewegung, etwas von dem Piezo-Schallwandler auf den MUT-Schallwandler über mehrere Elemente des Arrays verteilt wird.

Gemäß einem weiteren Ausführungsbeispiel sind die Empfangsrichtung und die Abstrahlrichtung über ein die Schallwelle reflektierendes Objekt trigonometrisch verknüpft. Vorteilhaft daran ist, dass ein Ort, an dem sich ein Objekt befindet, über die trigonometrische Beziehung feststellbar ist und ein wechselseitiger funktioneller Zusammenhang zwischen empfangener Schallwelle und gesendeter Schallwelle herstellbar ist.

Gemäß einem weiteren Ausführungsbeispiel umfasst ein akustisches System eine akustische Wandlervorrichtung und eine Steuervorrichtung, die ausgebildet ist, um den Piezo-Schallwandler der Wandlervorrichtung zu steuern, um von dem MUT-Schallwandler das Ausgangssignal zu erhalten und um ein Informationssignal bereitzustellen, das eine Information aufweist, die sich auf den Erhalt der zweiten Schallwelle basierend auf einer Reflexion der ersten Schallwelle an einem Objekt bezieht. Vorteilhaft daran ist, dass mittels in Beziehungsetzen der ersten Schallwelle mit der (erwarteten) zweiten Schallwelle eine Detektion, eines Objekts, das die Schallwelle reflektiert, oder eine Bestimmung einer Eigenschaft desselben (etwa eine Größe, ein Abstand, eine Oberflächenbeschaffenheit oder dergleichen), ermöglicht ist.

Gemäß einem weiteren Ausführungsbeispiel ist die Steuervorrichtung ausgebildet, um den Piezo-Schallwandler und den MUT-Schallwandler während eines Zeitintervalls gleichzeitig anzusteuern, so dass der Piezo-Schallwandler und der MUT-Schallwandler die erste Schallwelle gleichzeitig erzeugen. Vorteilhaft daran ist, dass die erste Schallwelle mit einer hohen Schallleistung erzeugbar ist.

Gemäß einem weiteren Ausführungsbeispiel umfasst das akustische System eine Verarbeitungsanordnung, die ausgebildet ist, um das Informationssignal von der Steuervorrichtung zu erhalten und um ein Bildsignal aus dem Informationssignal zu erzeugen, das als optisches Bild der empfangenen Schallwelle darstellbar ist und auf einer Reflexion der ersten Schallwelle an einem Objekt basiert, wobei basierend auf der Reflexion die zweite Schallwelle erhalten wird. Vorteilhaft daran ist, dass das akustische System als Messkopf für bildgebende akustische Verfahren einsetzbar ist.

Gemäß einem weiteren Ausführungsbeispiel umfasst die Wandlervorrichtung des akustischen Systems eine Vielzahl von MUT-Schallwandlern, wobei das Informationssignal auf einer Vielzahl von Ausgangssignalen basiert, die auf der zweiten Schallwelle basieren, wobei das akustische System eine Verarbeitungsanordnung umfasst, die ausgebildet ist, um basierend auf dem Informationssignal eine Richtung, aus der die zweite Schallwelle von der Wandlervorrichtung empfangen wird, zu bestimmen. Vorteilhaft daran ist, dass basierend auf der Richtung, aus der die zweite Schallwelle empfangen wird, Informationen über das Objekt, das die Schallwelle reflektiert, erhalten werden kann, etwa ein Ort. Dies ermöglicht ein empfängerseitiges Beamforming, so dass eine Anzahl von mechanisch beweglichen Elementen, etwa verkippbare oder verschiebbare Elemente, der Wandlervorrichtung gering ist oder eine Anordnung derselben verhindert werden kann. Dies kann zu einer erhöhten mechanischen Robustheit der Wandlervorrichtung führen.

Gemäß einem weiteren Ausführungsbeispiel umfasst ein akustisches System ein Anzeigeelement, das ausgebildet ist, um ein Bildsignal oder eine Information, die auf dem Informationssignal basiert, darzustellen. Vorteilhaft daran ist, dass ein optisches Bild der empfangenen Schallwelle oder aus dem Informationssignal abgeleitete Informationen, wie etwa eine Größe oder ein Abstand des Objekts grafisch darstellbar sind.

Gemäß einem weiteren Ausführungsbeispiel ist der Piezo-Schallwandler als ein Array umfassend eine Mehrzahl von Piezo-Schallwandlerelementen gebildet, wobei die Steuervorrichtung ausgebildet ist, um die Vielzahl von Piezo-Schallwandlerelementen in einem ersten Zeitintervall so anzusteuern, dass die erste Schallwelle in eine erste Richtung ausgesendet wird. Die Steuervorrichtung ist ausgebildet, um die Vielzahl von Piezo-Schallwandlerelementen in einem zweiten Zeitintervall so anzusteuern, dass die erste Schallwelle in eine zweite Richtung ausgesendet wird. Dies ermöglicht eine veränderte Abstrahlrichtung des akustischen Systems, wobei auf ein mechanisches Verkippen des Senders verzichtet werden kann. Dies ermöglicht eine erhöhte Robustheit des akustischen Systems.

Gemäß einem weiteren Ausführungsbeispiel sind der Piezo-Schallwandler und der MUT-Schallwandler der Wandlervorrichtung in einem Stapel fest miteinander verbunden. Durch eine Bewegung eines Elementes des Piezo-Schallwandlers ist eine Bewegung in einem Element des MUT-Schallwandlers bewirkbar. Die Steuervorrichtung ist ausgebildet, um den Piezo-Schallwandler so anzusteuern, dass sich dieser mit einer Frequenz bewegt, die im Wesentlichen einer mechanischen Resonanzfrequenz des MUT-Schallwandlers entspricht. Dies ermöglicht den Betrieb des Piezo-Schallwandlers in Resonanz und/oder Antiresonanz des MUT-Schallwandlers. Dies ermöglicht eine Anpassung eines Frequenzbereichs der ersten Schallwelle.

Gemäß einem weiteren Ausführungsbeispiel umfasst eine akustische Koppelstruktur eine akustische Linse, die ausgebildet ist, um eine empfangene Schallwelle an einer ersten Seite zu empfangen, um die empfangene Schallwelle zu beeinflussen, um eine beeinflusste Schallwelle an einer zweiten Seite der akustischen Linse zu erhalten. Die akustische Koppelstruktur umfasst ferner einen Schallwandler, der an einer zweiten Seite der akustischen Linse mit der akustischen Linse mechanisch verbunden ist, so dass die von der akustischen Linse beeinflusste Schallwelle mittels des Schallwandlers in ein die akustische Koppelstruktur umgebendes Medium koppelbar ist. Vorteilhaft daran ist, dass die akustische Linse, das bedeutet die akustische Strahlformung, an den MUT-Schallwandler anpassbar ist, wobei das akustische Koppelement mit unterschiedlichen Schallwandlern zur Erzeugung der Schallwelle koppelbar oder verbindbar ist.

Weitere Ausführungsbeispiele beziehen sich auf ein Verfahren zum Betrieb einer akustischen Wandlerstruktur und auf ein Verfahren zum Herstellen einer akustischen Koppelstruktur.

Weitere vorteilhafte Ausführungsformen sind der Gegenstand der abhängigen Patentansprüche.

Bevorzugte Ausführungsbeispiele der vorliegenden Erfindung werden nachfolgend Bezug nehmend auf die beiliegenden Zeichnungen erläutert. Es zeigen:
- Fig. 1: ein schematisches Blockschaltbild einer akustischen Wandlervorrichtung gemäß einem Beispiel, welches nicht Teil der Erfindung darstellt;
- Fig. 2: ein schematisches Blockschaltbild einer akustischen Wandlervorrichtung, die einen modifizierten Piezo-Schallwandler aufweist, gemäß einem Beispiel, welches nicht Teil der Erfindung darstellt;
- Fig. 3: ein schematisches Blockschaltbild einer akustischen Wandlervorrichtung, die den modifizierten Piezo-Schallwandler und einen modifizierten MUT-Schallwandler aufweist, gemäß einem Beispiel, welches nicht Teil der Erfindung darstellt;
- Fig. 4: eine schematisches Blockschaltbild einer akustischen Wandlervorrichtung, die Verbindungen zwischen MUT-Schallwandlerelementen aufweist, gemäß einem Beispiel, welches nicht Teil der Erfindung darstellt;
- Fig. 5: ein schematisches Blockschaltbild einer akustischen Wandlervorrichtung, die den Piezo-Schallwandler und den modifizierten MUT-Schallwandler umfasst, gemäß einem Beispiel, welches nicht Teil der Erfindung darstellt;
- Fig. 6: eine schematische Ansicht einer akustischen Koppelstruktur gemäß einem Beispiel, welches nicht Teil der Erfindung darstellt;
- Fig. 7: ein schematisches Blockschaltbild einer akustischen Wandlervorrichtung, die eine akustische Linse aufweist, gemäß einem Ausführungsbeispiel;
- Fig. 8a: eine schematische Ansicht einer Wandlervorrichtung, bei der der MUT-Schallwandler flächig kreisförmig gebildet ist und bei der der Piezo-Schallwandler ringförmig gebildet ist, gemäß einem Ausführungsbeispiel;
- Fig. 8b: eine schematische Ansicht einer Wandlervorrichtung, bei der der Piezo-Schallwandler als Polygonzug gebildet ist, gemäß einem Ausführungsbeispiel;
- Fig. 8c: eine schematische Ansicht einer Wandlervorrichtung, die komplementär oder umgekehrt zu der Wandlervorrichtung aus Fig. 8b gebildet ist, gemäß einem Beispiel, welches nicht Teil der Erfindung darstellt;
- Fig. 8d: eine schematische perspektivische Ansicht der Konfiguration aus Fig. 8a;
- Fig. 9a: eine schematische Ansicht einer Wandlervorrichtung, bei der zwei Piezo-Schallwandler den MUT-Schallwandler beabstandet sind, gemäß einem Beispiel, welches nicht Teil der Erfindung darstellt;
- Fig. 9b: eine schematische Ansicht einer Wandlervorrichtung bei der zwei MUT-Schallwandler durch den Piezo-Schallwandler 12 beabstandet sind, gemäß einem Beispiel, welches nicht Teil der Erfindung darstellt;
- Fig. 9c: eine schematische Ansicht einer Wandlervorrichtung, bei der jeweils zwei MUT-Schallwandler durch je einen Piezo-Schallwandler voneinander beabstandet sind, gemäß einem Beispiel, welches nicht Teil der Erfindung darstellt;
- Fig. 10: ein schematisches Blockschaltbild eines akustischen Systems gemäß einem Ausführungsbeispiel;
- Fig. 11: ein schematisches Flussdiagramm eines Verfahrens zum Betrieb einer akustischen Wandlerstruktur gemäß einem Ausführungsbeispiel; und
- Fig. 12: ein schematisches Flussdiagramm eines Verfahrens zum Herstellen eines akustischen Koppelelementes gemäß einem Ausführungsbeispiel.

Bevor nachfolgend Ausführungsbeispiele der vorliegenden Erfindung im Detail anhand der Zeichnungen näher erläutert werden, wird darauf hingewiesen, dass identische, funktionsgleiche oder gleichwirkende Elemente, Objekte und/oder Strukturen in den unterschiedlichen Figuren mit den gleichen Bezugszeichen versehen sind, so dass die in unterschiedlichen Ausführungsbeispielen dargestellte Beschreibung dieser Elemente untereinander austauschbar ist bzw. aufeinander angewendet werden kann.

Nachfolgend beschriebene Ausführungsbeispiele beziehen sich auf Piezo-Schallwandler und MUT-Schallwandler. Piezo-Schallwandler können ein oder mehrere piezoaktive Materialien aufweisen, etwa ein PZT-Material (Blei-(Pb-)Zirkonat-Titanat), ein Zinkoxidmaterial (ZnO) oder dergleichen.

Piezo-Schallwandler können ein oder mehrere Komponenten aufweisen. Zumindest eines der Elemente kann ausgebildet sein, um unter Ausnutzung eines Piezoeffektes eine durch äußere Kräfte induzierte Verformung des Piezomaterials in eine elektrische Spannung umzuwandeln und/oder, um unter Ausnutzung eines inversen Piezoeffektes eine angelegte elektrische Spannung in eine Verformung des piezoelektrischen Materials umzuwandeln. Piezo-Schallwandler können somit ausgebildet sein, um bei einer Ansteuerung mit einem Ansteuersignal eine Schallwelle, die aus der Verformung der Piezo-Materialien resultiert, zu erzeugen. Eine eintreffende Schallwelle, die zu einer Verformung der Piezo-Materialien führt, kann als elektrisches Signal an dem Piezo-Schallwandler abgegriffen werden. Piezo-Schallwandler können beispielsweise als Stapelkonfiguration (stack) oder Patch-Konfiguration (patch = Flicken, Aufnäher) ausgeführt sein. Insbesondere PatchWandler zeichnen sich durch hohe Scherkräfte aus, die in eine Struktur induzierbar sind, was hohe Kräfte ermöglicht, die in die Struktur eingeleitet werden. Patchwandler und Stackwandler können aus mehreren Komponenten gebildet sein, etwa mehrere Piezolagen eines Stacks oder mehrere Piezofasern oder -bereiche eines Patches.

MUT-Schallwandler können eine geringe bauliche Größe aufweisen und einen oder mehrere physikalische Effekte ausnutzen. Beispielsweise nutzen sogenannte CMUT-Schallwandler (capacitive MUT, kapazitiver MUT) einen kapazitiven Effekt aus, bei dem eine Bewegung einer Platte zu einer Änderung eines Kapazitätswertes führt, der in einem Ausgangssignal erfasst werden kann. Magnetische MUT-Schallwandler (MMUT = magnetive MUT, magnetischer MUT) können ausgebildet sein, um eine Veränderung eines Magnetfeldes und/oder eine Bewegung eines beweglichen Elementes in einem Magnetfeld zu detektieren. Den piezoelektrischen Effekt ausnutzende MUT (PMUT = piezoelectric MUT, piezoelektrischer MUT) können beispielsweise ausgebildet sein, um eine Verformung der Membran mittels eines durch piezoelektrisch bereitgestellte Ladungsträger, die auf der Verformung basieren, zu erfassen. Vergleichen mit Piezo-Schallwandlern können MUT-Schallwandler eine geringe Steifigkeit eines Ersatz-Feder-Masse-Systems, das den jeweiligen Wandler beschreibt, aufweisen. Dies kann auch so interpretiert werden, dass beispielsweise Piezo-Schallwandler hohe Kräfte in Strukturen induzieren können, das bedeutet hohe Amplituden (etwa von Schallwellen) erzeugbar sind, wohingegen eine Empfindlichkeit auf eintreffende Kräfte gering ist. Bei MUT-Schallwandlern kann die Empfindlichkeit basierend auf einer geringen Steifigkeit, die eine hohe Bewegung der MUT-Komponenten ermöglichen kann, hoch sein, wohingegen die geringe Steifigkeit (hohe Weichheit) zu einer geringeren Effizienz der Krafteinleitung führen kann.

Piezo-Schallwandler und/oder MUT-Schallwandler können eine Array-Konfiguration umfassend eine Mehrzahl von Piezo-Schallwandlerelementen bzw. MUT-Schallwandlerelementen aufweisen. Das bedeutet, dass ein MUT-Schallwandler oder ein Piezo-Schallwandler als Verbund aus mehreren oder vielen MUT-Zellen bzw. Piezo-Zellen gebildet sein kann. Ein MUT-Schallwandler bzw. ein Piezo-Schallwandler kann so verstanden werden, dass alle Schallwanderelemente (Zellen) im Schallwandler (Element) elektrisch parallel geschalten sind.

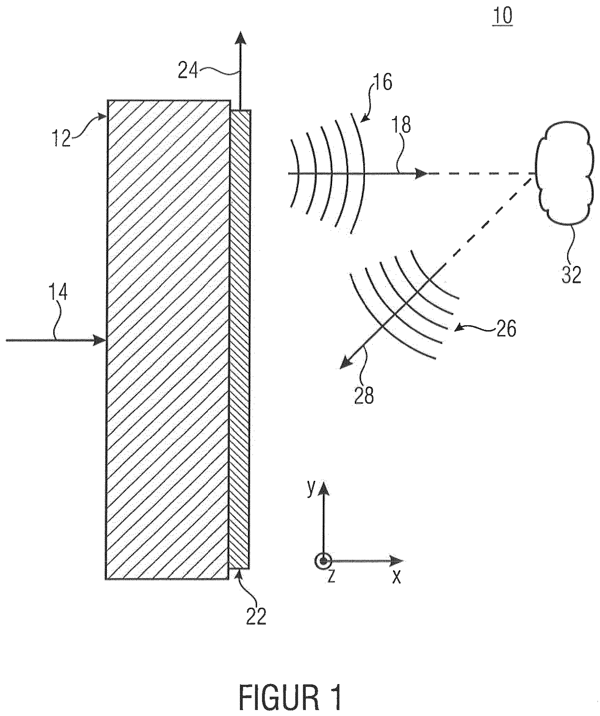

Fig. 1 zeigt ein schematisches Blockschaltbild einer akustischen Wandlervorrichtung 10 gemäß einem Beispiel. Die akustische Wandlervorrichtung 10 umfasst einen Piezo-Schallwandler 12, der ausgebildet ist, um basierend auf einem Ansteuersignal 14 eine Schallwelle 16 in eine Abstrahlrichtung 18 auszusenden.

Die akustische Wandlervorrichtung 10 umfasst einen MUT-Schallwandler 22, der ausgebildet ist, um ein Ausgangssignal 24 basierend auf einer Schallwelle 26 bereitzustellen, das aus einer Empfangsrichtung 28 empfangen wird.

Beispielsweise kann die Schallwelle 26 basierend auf einer Reflexion der Schallwelle 16 an einem Objekt 32 basieren. Die Abstrahlrichtung 18 und die Empfangsrichtung 28 können trigonometrisch verknüpft sein, etwa basierend auf einer Ausrichtung einer Oberfläche des Objekts 32 bezüglich der Abstrahlrichtung 18. Eine trigonometrische Verknüpfung kann eine Ab- oder Umlenkung der Schallwelle 16 entlang einer oder mehrerer Raumrichtungen, beispielsweise eine x-Richtung, eine y-Richtung und/oder eine z-Richtung umfassen. Insbesondere kann die Schallwelle 16 von mehreren Objekten abgelenkt, beeinflusst und/oder reflektiert werden.

Die Vorrichtung 10 kann beispielsweise als Messkopf für ein akustisches System, wie es etwa für ein bildgebendes akustisches Verfahren einsetzbar ist, genutzt werden. Gemäß einer vorteilhaften Ausführung können eine oder mehrere Richtungskomponenten x, y und/oder z der Abstrahlrichtung 18 und der Empfangsrichtung 26 gleich sein. Beispielsweise kann dies so verstanden werden, dass die Schallwelle 16 in eine Richtung der Vorrichtung 10 ausgesendet wird und die Schallwelle 26 aus dieser Richtung empfangen wird ggf. mit einer veränderten Streucharakteristik und/oder einem veränderten Winkel, in dem die Schallwelle 26 auf die Vorrichtung 10 trifft.

Der MUT-Schallwandler 22 kann direkt mit dem Piezo-Schallwandler 12 verbunden sein. Dies kann bspw. durch ein Klebe- oder ein Bonding-Verfahren erhalten werden. Der Piezo-Schallwandler 12 und der MUT-Schallwandler 22 können zumindest einen Teil eines Stapels bilden, in dem die Schallwandler 12 und 22 fest miteinander verbunden sind. Dabei können Schichten zwischen den Schallwandlern 12 und 22 angeordnet sein, beispielsweise Klebeschichten. Alternativ können die Schallwandler 12 und 22 direkt an einander angeordnet sein.

Die feste Verbindung der Schallwandler 12 und 22 miteinander kann eine akustische Kopplung der Schallwandler 12 und 22 ermöglichen. Bspw. kann durch eine Bewegung eines Elementes des Piezo-Schallwandlers 12 eine Bewegung in einem Element des MUT-Schallwandlers 22 bewirkbar ist und anders herum. Führt beispielsweise der Piezo-Schallwandler 12 eine Bewegung aus, so kann diese Bewegung auf den MUT-Schallwandler übertragen werden und beispielsweise ein bewegliches Element desselben (etwa eine Platte) zu einer Bewegung, Oszillation oder Schwingung anregen. Vereinfacht ausgedrückt kann der MUT-Schallwandler durch ein Aussenden der Schallwelle durch den Piezo-Schallwandler direkt angeregt werden. Alternativ oder zusätzlich kann eine Bewegung des MUT-Schallwandlers 22 eine Bewegung eines Elementes des Piezo-Schallwandlers 12 bewirken.

Die akustische Wandlervorrichtung 10 ermöglicht das Aussenden der Schallwelle 16 mit einer hohen Schalldruckleistung der Schallwelle 16. Ferner ermöglicht die akustische Wandlervorrichtung 10 ein effizientes, d. h. präzises und/oder empfindliches Empfangen der Schallwelle 26.

Gegenüber bekannten Konzepten, bei denen Sende- und Empfangswandler meist nicht nur vom gleichen Wandlertyp (etwa Piezo), sondern ein und derselbe Wandler sind, kann eine funktionelle Trennung eines Empfangsschallwandlers (oder ggf. Empfangsarray) und eines Sendeschallwandlers (ggf. Sendearray) eine erhöhte Effizienz der Vorrichtung ermöglichen. Die Integration als Array, d. h. die Anordnung vieler einzelner ansteuerbarer Elemente im Raum ermöglicht elektronisch den Schallstrahl im Sende- bzw. Empfangsfall zu fokussieren und dadurch ein Bild zu erzeugen. Darüber hinaus ermöglicht die funktionelle Trennung eine wechselseitige positive Beeinflussung von Sendewandlern und Empfangswandlern.

In bekannten Konzepten werden empfangsseitige Anpassungen vorgeschlagen. So wird beispielsweise in der US 2010/0207489 A1 beschrieben, dass MUT-Schallwandler als Filter eingesetzt werden, um ein Signal, das von einem Piezo-Schallwandler im Empfangsfall erhalten wird, beeinflusst wird.

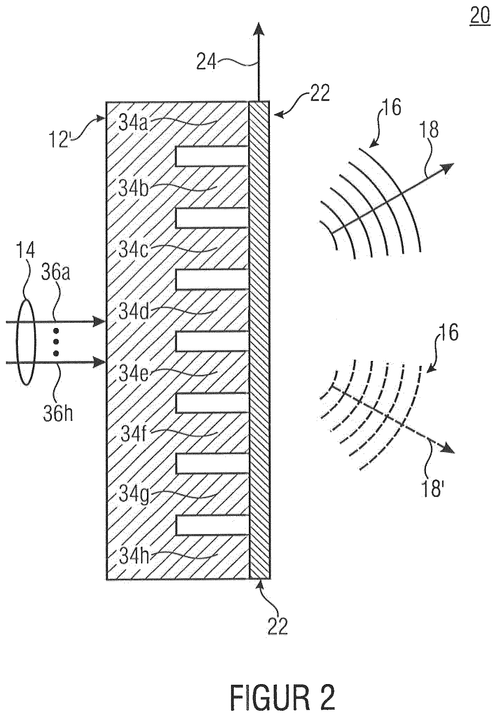

Fig. 2 zeigt ein schematisches Blockschaltbild einer akustischen Wandlervorrichtung 20 gemäß einem Beispiel, die gegenüber der akustischen Wandlervorrichtung 10 einen modifizierten Piezo-Schallwandler 12' aufweist. Der Piezo-Schallwandler 12' umfasst eine Mehrzahl von Piezo-Schallwandlerelementen 34a-h. Das Ansteuersignal 14 kann eine entsprechende Vielzahl von Informationen oder Teilsignalen 36a-h aufweisen, so dass die Piezo-Schallwandlerelemente 34a-h individuell ansteuerbar sind. Die individuelle Ansteuerung kann so erfolgen, dass die Schallwelle 16 in einem ersten Zeitintervall entlang der Abstrahlrichtung 18 ausgesendet wird und in einem zweiten Zeitintervall entlang einer veränderten Abstrahlrichtung 18' ausgesendet wird. Das erste Zeitintervall und das zweite Zeitintervall können ganz oder teilweise miteinander überlappen oder ganz oder teilweise voneinander verschieden sein. So kann die Schallwelle 16 auch gleichzeitig entlang mehrerer Richtungen ausgesendet werden, etwa in dem für jede (Teil-)Schallwelle 16 lediglich ein Teil der Piezo-Schallwandlerelemente 34a-h angesteuert wird. Alternativ oder zusätzlich können die Schallwellen 16 auch nacheinander entlang unterschiedlicher Richtungen 18 bzw. 18' ausgesendet werden.

Der MUT-Schallwandler 22 kann mit mehreren oder allen Piezo-Schallwandlerelementen 34a-h mechanisch verbunden sein. Dies ermöglicht, dass die Bewegung der einzelnen Piezo-Schallwandlerelemente 34a-h (Piezo-Array-Elemente) an einer Oberfläche des MUT-Schallwandlers 22 weitergegeben werden können.

Vereinfacht ausgedrückt ermöglicht eine Ausführung des Piezo-Schallwandlers 12' als ein Array von Piezo-Schallwandlerelementen 34a-h eine Implementierung eines senderseitigen Strahlformens (Beamforming) während des Sendens der Schallwelle 16.

In anderen Worten kann der MUT-Schallwandler auch als Array ausgeführt werden, so dass ein Beamforming während eines Empfangens der Schallwelle für akustische bildgebende Verfahren ermöglicht wird.

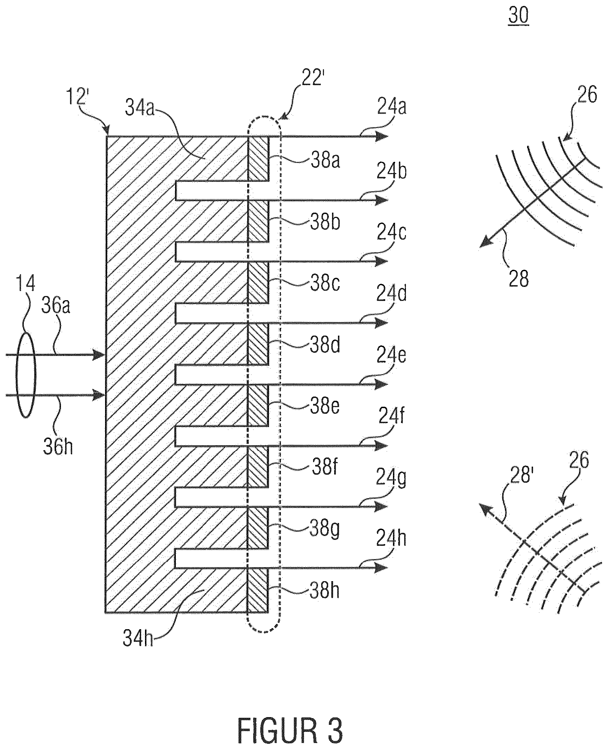

Fig. 3 zeigt ein schematisches Blockschaltbild einer akustischen Wandlervorrichtung 30 gemäß einem Beispiel, die gegenüber den akustischen Wandlervorrichtungen 10 und 20 einen modifizierten MUT-Schallwandler 22' aufweist. Die akustische Wandlervorrichtung 30 umfasst den Piezo-Schallwandler 12'. Der MUT-Schallwandler 22' umfasst eine Mehrzahl von MUT-Schallwandlerelementen 38a-h, die ausgebildet sind, um ein (Teil-)Ausgangssignal 24a-h bereitzustellen. Die Schallwelle 26 kann von unterschiedlichen MUT-Schallwandlerelementen 38a-h mit einem Phasenversatz zueinander und/oder mit einem verschiedenen Winkel empfangen werden, was eine Auswertung der von einander verschiedenen Signale 24a-h ermöglicht.

Der MUT-Schallwandler 22' kann auch so verstanden werden, dass die Vielzahl von MUT-Schallwandlerelementen 38a-h angeordnet ist, um die jeweils ausgebildet sind, um ein Ausgangssignal 24a-h basierend auf der empfangenen Schallwelle 26 bereitzustellen. Eine Auswertung der Ausgangssignale 24a-h ermöglicht ein empfängerseitiges Beamforming. Beispielsweise kann ein Prozessor ausgebildet sein, um die Vielzahl von Ausgangssignalen 24a-h auszuwerten, um eine Richtung 28 oder 28' zu bestimmen, aus der die empfangene Schallwelle 26 empfangen wird oder empfangen wurde.

Obwohl der Piezo-Schallwandler 12' und der MUT-Schallwandler 22' so beschrieben wurden, dass diese jeweils acht Schallwandlerelemente 34a-h bzw. 38a-h umfassen, können die Schallwandler 12' und/oder 22' auch eine andere Anzahl von Elementen aufweisen, beispielsweise zumindest 2 und höchstens 10000, zumindest 100 und höchstens 7000 oder zumindest 128 und höchstens 5000, etwa 128, 256, 1024 oder 2048. Die Anzahl von Schallwandlerelementen kann jedoch beliebig sein. Insbesondere können auch höhere Anzahlen realisiert werden, da ein begrenzender Faktor eine zunehmend beherrschbare und abnehmend einschränkende Komplexität elektronischer Schaltungen sein kann. Eine steigende Anzahl von Schallwandlerelementen kann als eine steigende Zahl von Kanälen **beschreiben** werden. Hohe Kanalanzahlen können prinzipiell mit MUT-Wandlern einfacher zu realisieren sein, als mit Piezo-Schallwandlern. Die Schallwandlerelemente können bspw. in einem eindimensionalen Array (1 x m mit m ≥ 2 oder n x 1 mit n ≥ 2) oder in einem zweidimensionalen Array (m x n mit m ≥ 1, n ≥ 1 und m + n ≥ 2) angeordnet sein. Die Anzahl von Schallwandlerelementen des Piezo-Schallwandlers 12' und des MUT-Schallwandlers 22' kann gleich oder voneinander verschieden sein.

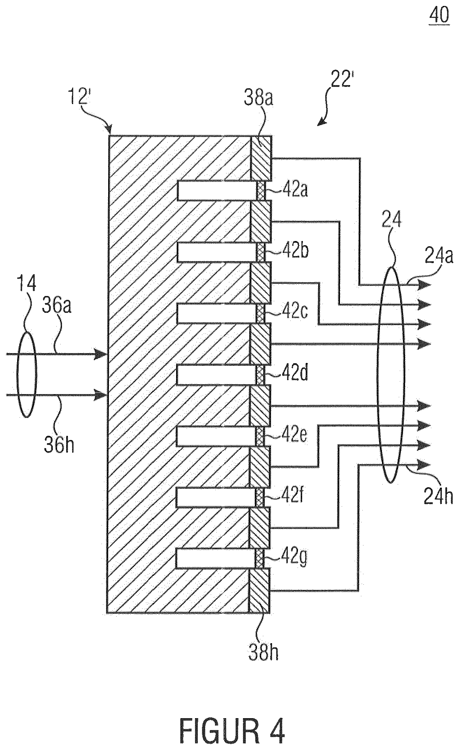

Fig. 4 zeigt eine schematisches Blockschaltbild einer akustischen Wandlervorrichtung 40 gemäß einem Beispiel, die den Piezo-Schallwandler 12' und den MUT-Schallwandler 22' aufweist. Zwischen zwei benachbarten MUT-Schallwandlerelementen 38a-h ist jeweils ein Verbindungselement 42a-g angeordnet, so dass zwei durch ein jeweiliges Verbindungselement 42a-g verbundenen MUT-Schallwandlerelemente 38a-h mechanisch miteinander verbunden sind.

Die Verbindungselemente 42a-h können ebenfalls eine Schallwandlerfunktion aufweisen, etwa indem sie als MUT-Schallwandler oder MUT-Schwallwandlerelement ausgeführt sind.

Die Verbindungselemente können jeweils oder gemeinsam ausgebildet sein, um ein Ausgangssignal bereitzustellen. Alternativ kann bspw. der MUT-Schallwandler 22 so modifiziert werden, dass er in einem Bereich zwischen den Piezo-Schallwandlerelementen 34a-f dünner ausgeformt ist

Alternativ oder zusätzlich können auch die Piezo-Schallwandlerelemente des Piezo-Schallwandlers 12' mechanisch miteinander verbunden sein. So kann beispielsweise eine Verbindung zwischen MUT-Schallwandlerelementen 38a-h mittels der Verbindungselemente 42a-g ermöglichen, dass eine Aktuierung eines der Piezo-Schallwandlerelemente auf mehrere oder alle der MUT-Schallwandlerelemente 38a-h in Form einer Bewegung oder Schwingung übertragen wird und diese mittels des Ausgangssignals 24 erfassbar ist. Eine Verbindung der Piezo-Schallwandlerelemente untereinander kann ermöglichen, dass eine Bewegung eines der MUT-Schallwandlerelemente 38a-h zu einer Bewegung in einem oder mehreren Piezo-Schallwandlerelementen führt, die mittels des Piezo-Effektes als Signal an den Piezo-Schallwandler erhalten werden kann. Dies kann beispielsweise an den gleichen Anschlüssen erfolgen, an denen das Ansteuersignal 14 an den Piezo-Schallwandler 12' geliefert wird.

In anderen Worten kann der MUT-Schallwandler auf das komplette Piezo-Array aufgebracht werden. Der MUT-Schallwandler (MUT-Schallwandler) kann sich hinsichtlich seiner Geometrie und Steifigkeit angepasst oder optimiert werden, beispielsweise so dass die Bewegung der einzelnen Piezo-Array-Elemente an die Oberfläche des MUT-Schallwandlers weitergegeben werden kann.

In anderen Worten zeigt Fig. 4 ein Piezo-Wandler-Array mit angepasstem MUT-Schallwandler.

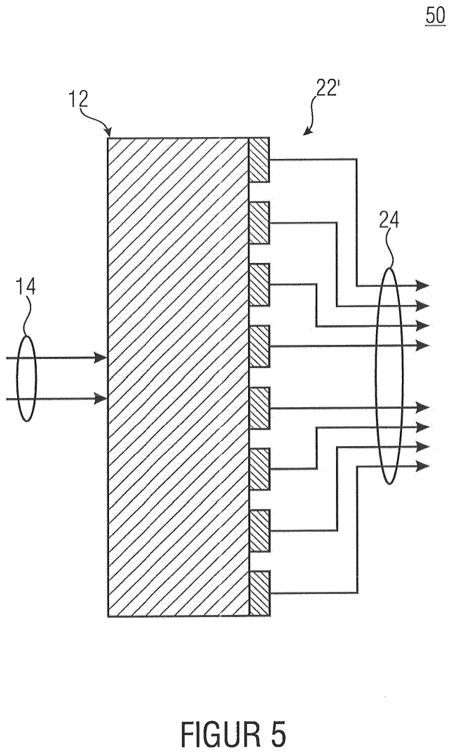

Fig. 5 zeigt ein schematisches Blockschaltbild einer akustischen Wandlervorrichtung 50 gemäß einem Bespiel, die den Piezo-Schallwandler 12 und den MUT-Schallwandler 22' umfasst, der an dem Piezo-Schallwandler 12 angeordnet ist. Eine derartige Anordnung ermöglicht beispielsweise ein empfängerseitiges Beamforming.

Neben einer mechanischen Kopplung zwischen den Piezo-Schallwandlern 12 oder 12' und den MUT-Schallwandlern 22 oder 22' weisen die akustischen Wandlervorrichtungen 10, 20, 30, 40 und 50 auch eine akustische Kopplung zwischen den Schallwandlern auf. Das bedeutet, dass durch ein Aussenden der Schallwelle 16 auch der MUT-Schallwandler angeregt wird.

In anderen Worten kann der MUT-Schallwandler auf dem Piezo-Wandler direkt angebracht werden. Zum Senden kann der Piezo-Schallwandler elektrisch zum Schwingen angeregt werden. Der MUT-Schallwandler ist beispielsweise so angebracht, dass er die gleiche Schwingung wie der Piezo-Schallwandler ausführt. Der Piezo-Schallwandler kann somit als Aktuator für den kompletten MUT-Schallwandler dienen. Der Schall kann an der Frontseite des MUT-Schallwandlers abgestrahlt werden.

Zum Empfangen kann das Schallsignal am MUT-Schallwandler ausgewertet werden. Der MUT-Schallwandler kann eine höhere Empfangsempfindlichkeit aufweisen, als der Piezo-Wandler.

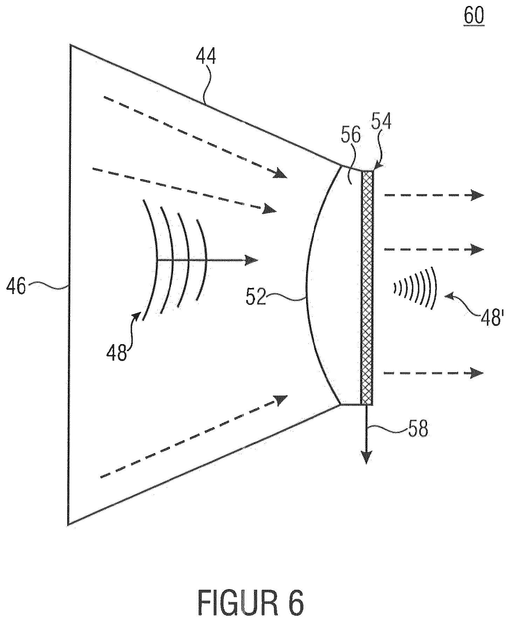

Fig. 6 zeigt eine schematische Ansicht einer akustischen Koppelstruktur 60 gemäß einem Bespiel, die eine akustische Linse 44 aufweist. Die akustische Linse 44 weist eine erste Seite 46 auf, wobei die akustische Linse 44 ausgebildet ist, um eine Schallwelle 48, etwa die Schallwelle 16, zu empfangen. Die optische Linse 44 ist ausgebildet, um die Schallwelle 48 zu beeinflussen. Dies kann sich beispielsweise auf eine Fokussierung und/oder eine Streuung der Schallwelle 48 beziehen. Die akustische Linse 44 weist eine zweite Seite 52 auf. Die zweite Seite 52 ist beispielsweise konkav geformt. Alternativ kann die zweite Seite 52 auch eine andere Form aufweisen, etwa konvex, abschnittsweise gewölbt oder gerade oder als gerade Seite ausgeführt sein. Obwohl die erste Seite 46 gerade geformt dargestellt ist, kann die erste Seite 46 auch eine andere Form aufweisen, beispielsweise eine konvexe Form oder eine konkave Form oder eine Kombination von geraden und gewölbten Formen. Beispielsweise kann die optische Linse 52 ausgebildet sein, um die Schallwelle 48 zu fokussieren und kollimiert auszusenden, wie es durch die gestrichelten Strahlengänge angedeutet ist.

An der zweiten Seite 52 oder benachbart hierzu kann ein Schallwandler 54 angeordnet sein, beispielsweise der MUT-Schallwandler 22 oder der Piezo-Schallwandler 12. Alternativ oder zusätzlich kann auch ein anderer Schallwandler, etwa der Piezo-Schallwandler 12' oder der MUT-Schallwandler 22' angeordnet sein. Zwischen dem Schallwandler 54 und der zweiten Seite 52 kann ein Volumen 56 angeordnet sein. Das Volumen 56 kann ein Fluid, etwa eine Flüssigkeit oder ein Gas oder ein Vakuum beinhalten. Alternativ kann in dem Volumen 56 auch ein Feststoff angeordnet, oder das Volumen 56 nicht angeordnet sein, etwa wenn die zweite Seite 52 gerade ausgeführt ist.

Der Schallwandler 54 kann ausgebildet sein, um ein Ausgangssignal 58 bereitzustellen, etwa das Ausgangssignal 24. Der Schallwandler 54 kann an der zweiten Seite 52 mit der akustischen Linse 52 mechanisch verbunden sein, so dass die von der akustischen Linse 44 beeinflusste Schallwelle 48 als beeinflusste Schallwelle 48' mittels des Schallwandlers 54 in ein die akustische Koppelstruktur 60 umgebendes Medium koppelbar ist. Das umgebende Medium kann beispielsweise ein Fluid sein, etwa ein Gas (Luft) oder eine Flüssigkeit.

Die akustische Koppelstruktur 60 kann mit einem (Sende-)Schallwandler koppelbar und ausgebildet sein, um eine von dem gekoppelten Schallwandler erzeugte Schallwelle 48 so zu beeinflussen, dass die beeinflusste Schallwelle 48' auf den Schallwandler 54 abgestimmt ist.

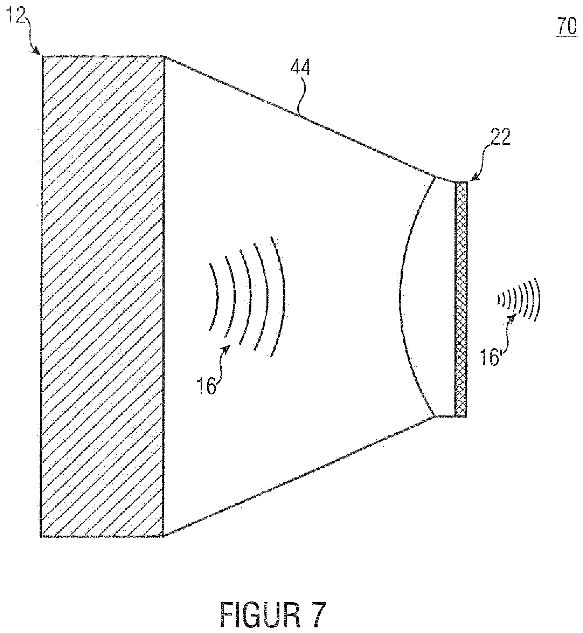

Fig. 7 zeigt ein schematisches Blockschaltbild einer akustischen Wandlervorrichtung 70 gemäß einem Ausführungsbespiel, die die akustische Linse 44 aufweist, die zwischen dem Piezo-Schallwandler 12 und dem MUT-Schallwandler 22 angeordnet ist. Die akustische Linse 44 ist ausgebildet, um den Piezo-Schallwandler und den MUT-Schallwandler akustisch zu koppeln. Hierfür kann beispielsweise die erste Seite der akustischen Linse 44 mit dem Piezo-Schallwandler 12 mechanisch oder mechanisch fest verbunden sein.

Die akustische Linse 44 ist ausgebildet, um eine Ausbreitung der Schallwelle 16 zu beeinflussen. Der MUT-Schallwandler 22 ist mit der akustischen Linse 44 mechanisch verbunden, wie es im Zusammenhang mit dem Schallwandler 54 beschrieben ist. Dies ermöglicht, dass die von dem Piezo-Schallwandler 12 ausgesendete Schallwelle 16 beeinflusst wird, so dass eine beeinflusste Schallwelle 16' erhalten wird. Die beeinflusste Schallwelle kann auf den MUT-Schallwandler treffen und in ein Medium, das an einer Seite des MUT-Schallwandlers 22, die der akustischen Linse 44 abgewandt angeordnet ist, eingekoppelt werden.

Obwohl die akustische Wandlervorrichtung 70 so beschrieben ist, dass der Piezo-Schallwandler 12 und der MUT-Schallwandler 22 mittels der akustischen Linse 44 akustisch gekoppelt sind, kann auch ein anderes Koppelelement zwischen den Schallwandler 12 und 22 angeordnet sein, etwa ein Dämpfer, ein akustischer Kanal oder dergleichen. Alternativ oder zusätzlich kann die akustische Wandlervorrichtung 70 auch mehrfach, d. h. als Array, angeordnet sein.

In anderen Worten zeigt Fig. 7 einen Piezo-Wandler mit akustischer Strahlführung und anschließendem MUT-Element sowie eine Verbindung von MUT-Schallwandler und Piezo-Schallwandler über eine akustische Strahlführung. Vor allem im Bereich der Ultraschallmikroskopie können "große" Ein-Element-Wandler eingesetzt werden, um ausreichend Schalldruck erreichen zu können, unter anderem weil die Integration eines Piezos als Array in diesem Frequenzbereich von beispielsweise mehr als 10 MHz technisch sehr aufwendig ist. Der vom Piezo-Schallwandler abgestrahlte Schall kann durch Koppelelemente, etwa Zwischenschichten, akustische Anpassungsschichten und/oder akustische Linsen, geformt und/oder fokussiert werden. Die Mikrosystemtechnik ist es möglich, MUT-Arrays auch für Frequenzbereiche von mehr als 30 MHz herzustellen. Dies kann jedoch basierend auf einer geringen Impedanz der MUT-Schallwandler dazu führen, dass im Sendefall lediglich geringe Sendeleistungen der MUT-Schallwandler erhalten werden, so dass diese nur noch wenig Schall emittieren. Dieser technische Nachteil kann unter Verwendung des Piezo-Schallwandlers teilweise, ganz oder überkompensiert werden. Ausführungsbeispiele ermöglichen Schall mit einem Piezo-Schallwandler zu senden, mittels akustischer Strahlführung zu formen und anschließend einen MUT-Schallwandler zu integrieren. Der MUT-Schallwandler kann durch die einfallende Schallwelle (Schallwelle 16) von hinten ausgelenkt und der Schall auf das Testobjekt weitergeleitet werden.

Im Empfangsfall kann der MUT-Schallwandler als Detektor genutzt werden. Der MUT-Schallwandler kann wiederum als Einzelelement ausgeführt sein, um eine Empfindlichkeit gegenüber einer Verwendung eines Piezo-Schallwandlers zu erhöhen. Besonders vorteilhaft kann die Auslegung des MUT-Schallwandlers als Array (als MUT-Schallwandler 22') sein, um auch ein sogenanntes Empfangs-Beamforming und mithin beispielsweise bildgebende Auswertungsverfahren zu ermöglichen, ohne den Wandler mechanisch zu kippen. Ferner kann eine Kombination von Beamforming und mechanischer Verkippung die Bildqualität und die Auflösung des bildgebenden Auswertungsverfahrens wesentlich erhöhen.

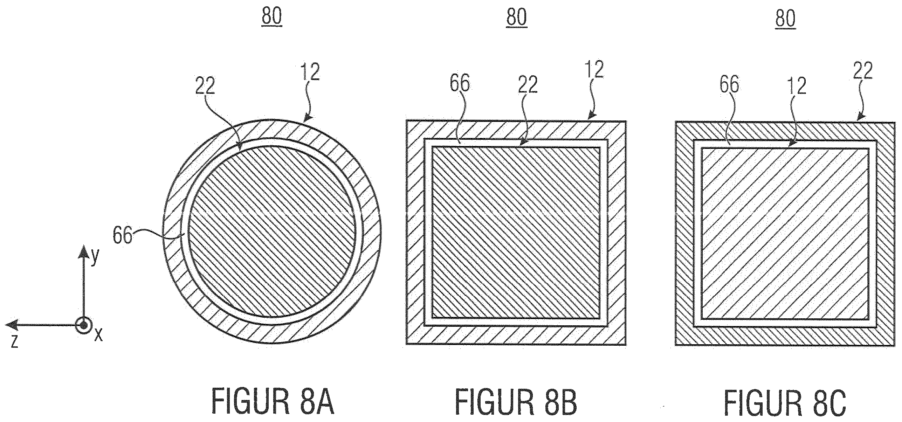

Obwohl die akustischen Wandlervorrichtungen 10, 20, 30, 40, 50 und 70 so beschrieben wurden, dass der MUT-Schallwandler entlang einer Richtung parallel zu der Abstrahlrichtung 18 der Schallwelle 16 angeordnet ist, können die Schallwandler auch in einer Ebene angeordnet sein, wie anhand der Fig. 8a-c nachfolgend erläutert wird. Alternativ kann der MUT-Schallwandler basierend auf der nachfolgenden Konfiguration auch in einer Richtung, die der Abstrahlrichtung 18 entgegengesetzt angeordnet ist, angeordnet sein.

Die Fig. 8a-c zeigen schematische Ansichten einer akustischen Wandlervorrichtung 80 mit voneinander verschiedenen Anordnungen des MUT-Schallwandlers 22 bezüglich des Piezo-Schallwandlers 12. Verglichen mit einer Perspektive, wie sie in der Fig. 1 dargestellt ist, ist die Perspektive der Fig. 8a-c um 90° im Raum gedreht, so dass eine Richtung parallel oder antiparallel zu der Abstrahlrichtung 16 in eine Richtung des Betrachters weist.

Fig. 8a zeigt eine schematische Ansicht einer ersten beispielhaften Konfiguration, bei der der MUT-Schallwandler 22 flächig kreisförmig gebildet ist und bei der der Piezo-Schallwandler 12 ringförmig gebildet ist. Ein Innendurchmesser des Piezo-Schallwandlers 12 ist größer oder gleich als ein Außendurchmesser des MUT-Schallwandlers 22. Werden die Orte des Piezo-Schallwandlers 12 und des MUT-Schallwandlers 22 in eine Ebene projiziert, beispielsweise eine Betrachtungsebene (bspw. eine x/y-Ebene) der Fig. 8a, so kann der Piezo-Schallwandler 12 alternativ zur vorliegenden Erfindung so angeordnet werden, dass er den MUT-Schallwandler 22 umschließt. Wie vorangehend ausgeführt, kann der MUT-Schallwandler 22 entlang der x-Richtung vor oder hinter dem Piezo-Schallwandler 12 angeordnet sein, oder eine gleiche Position in x-Richtung aufweisen.

Zwischen dem Piezo-Schallwandler 12 und dem MUT-Schallwandler 22 kann ein Abstand 66 angeordnet sein, wobei in einem Bereich des Abstandes 66 Elemente oder Medien angeordnet sein können, die eine akustische und/oder mechanische Kopplung zwischen den Wandlern 12 und 22 ermöglichen.

Fig. 8b zeigt eine beispielhafte Konfiguration des Piezo-Schallwandlers 12 und des MUT-Schallwandlers 22, bei der der Piezo-Schallwandler 12 als Polygonzug, etwa als in einem Viereck umlaufende Bahn, eine gekrümmte Bahn (Balken) oder dergleichen gebildet ist, der den MUT-Schallwandler 22 umschließt. Der MUT-Schallwandler 22 ist viereckig bzw. quadratisch geformt.

Fig. 8c zeigt eine erfindungsgemäße Konfiguration, die komplementär oder umgekehrt zu der Konfiguration ausgeführt ist, wie sie in der Fig. 8b dargestellt ist, ist. Der Piezo-Schallwandler 12 ist viereckig bzw. quadratisch geformt und von dem MUT-Schallwandler 22 umschlossen, der die Form der polygonen Bahn aufweist.

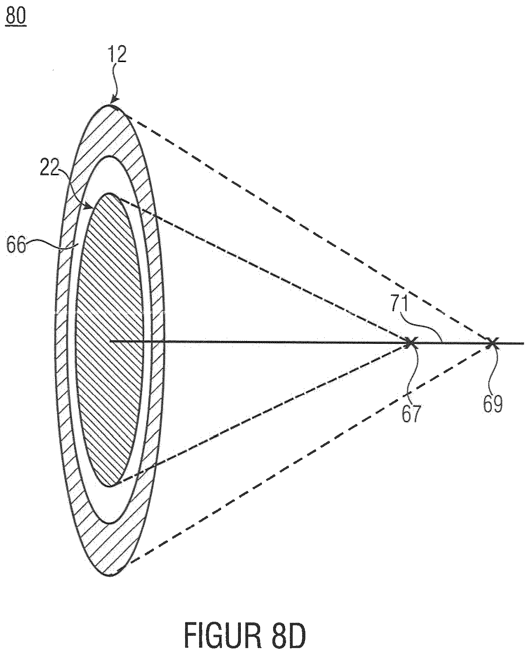

Fig. 8d zeigt eine beispielhafte schematische perspektivische Ansicht der Konfiguration aus Fig. 8a. Ein Fokuspunkt (Fokusbereich) 67 des MUT-Schallwandlers 22 und ein Fokuspunkt (Fokusbereich) 69 des Piezo-Schallwandlers 12 kann entlang einer der Linie 71 angeordnet sein. Die Fokuspunkte 67 und/oder 69 können sich auf einen jeweiligen natürlichen Fokus beziehen, den der MUT-Schallwandler 22 bzw. der Piezo-Schallwandler 12 in einem unangesteuerten oder von einer Steuervorrichtung unbeeinflussten Zustand aufweist. Der natürliche Fokus kann bspw. über ein sendeseitiges und/oder empfangsseitiges Beamforming verschoben werden. Die Linie 71 kann bspw. eine Mittelsenkrechte des Piezo-Schallwandlers 12 und/oder des MUT-Schallwandlers 22 bzw. eine Linie parallel hierzu sein. Vereinfacht ausgedrückt, kann die Wandlervorrichtung 80 ausgebildet sein, um in eine Richtung zu senden und um aus der gleichen Richtung eine Schallwelle zu empfangen. Obwohl die Punkte (Bereiche) 67 und 69 von einander verschieden dargestellt sind, können die Punkte (Bereiche) 67 und 69 auch an einem gleichen Ort angeordnet sein.

Alternativ kann der als umschließende Balken dargestellte MUT-Schallwandler 22 und/oder der Piezo-Schallwandler 12 auch flächig gebildet sein. Mittelpunkte der Schallwandler 12 und 22 können eine von dem jeweils anderen Schallwandler verschiedene Position entlang zumindest einer Raumrichtung x, y und/oder z aufweisen.

Obwohl die Schallwandler 12 und 22 so dargestellt sind, dass sie kreisförmig, viereckig bzw. quadratisch sind, können beliebige andere Formen realisiert werden. Ferner können die Schallwandler 12 und 22 voneinander verschieden geformt sein. Beispielsweise kann der MUT-Schallwandler 22 kreisförmig sein und der Piezo-Schallwandler 12 eine polygone Form aufweisen und/oder umgekehrt. Beispielsweise kann ein Durchmesser des MUT-Schallwandlers 22 und/oder eine Diagonale des Piezo-Schallwandlers 12 der Fig. 8c eine beliebige Abmessung, etwa in einem Bereich von zumindest 0,1 mm und höchstens 500 mm, von zumindest 0,2 mm und höchstens 200 mm oder von zumindest 0,5 mm und höchstens 100 mm aufweisen.

In anderen Worten können MUT- und Piezo-Wandler nebeneinander in einem Ultraschallwandler integriert werden. Dabei sind beliebig geformte Arrays denkbar, die sich auch gegenseitig ein- oder umschließen können.

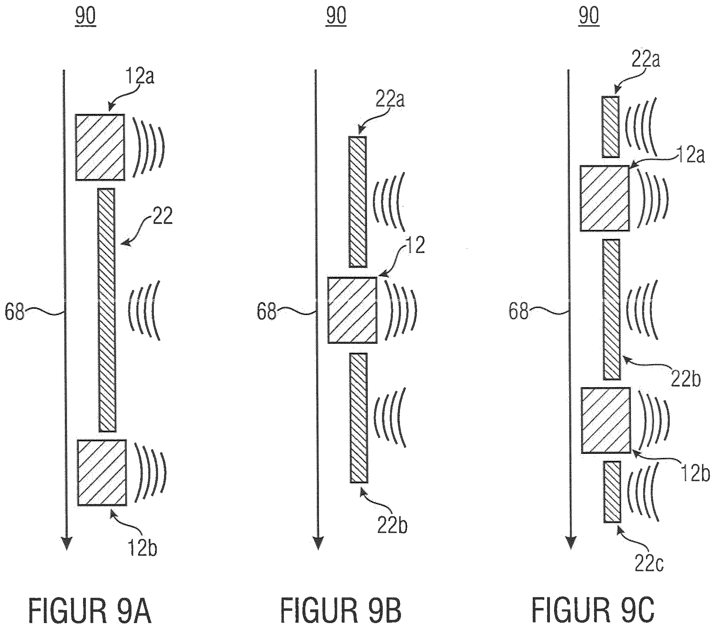

Fig. 9a-c zeigen beispielhafte schematische Ansichten einer Wandlervorrichtung 90, die eine Vielzahl von Schallwandlern aufweist. Die Wandlervorrichtung 90 umfasst zumindest zwei Piezo-Schallwandler und/oder zumindest zwei MUT-Schallwandler. Zwei gleichartige Schallwandler (Piezo-Schallwandler oder MUT-Schallwandler) sind entlang einer Strecke 68 durch einen andersartigen Schallwandler (MUT-Schallwandler bzw. Piezo-Schallwandler) beabstandet.

Gemäß der Konfiguration, wie sie in Fig. 9a dargestellt ist, sind zwei Piezo-Schallwandler 12a und 12b durch den MUT-Schallwandler 22 entlang der Strecke 68 beabstandet.

Gemäß der Konfiguration, wie sie in Fig. 9b dargestellt ist, sind zwei MUT-Schallwandler 22a und 22b durch den Piezo-Schallwandler 12 entlang der Strecke 68 beabstandet.

Gemäß der Konfiguration, wie sie in Fig. 9c dargestellt ist, sind jeweils zwei MUT-Schallwandler 22a und 22b bzw. 22b und 22c durch je einen Piezo-Schallwandler 12a bzw. 12b entlang der Strecke 68 voneinander beabstandet.

Obwohl die akustische Wandlervorrichtung 90 so beschrieben ist, dass sie zumindest zwei Piezo-Schallwandler oder zumindest zwei MUT-Schallwandler aufweist, können gemäß weiteren Ausführungsbeispielen akustische Wandlervorrichtungen mehr als zwei, mehr als fünf oder mehr als zehn Piezo-Schallwandler und/oder mehr als zwei, mehr als fünf oder mehr als zehn MUT-Schallwandler umfassen. Die Piezo-Schallwandler und die MUT-Schallwandler können alternierend (verschränkt) angeordnet sein, wobei stellenweise auch zwei oder mehr gleichartige Schallwandler nebeneinander angeordnet sein können. Zumindest ein Piezo-Schallwandler kann als modifizierter Piezo-Schallwandler, wie es im Zusammenhang mit Fig. 2 beschrieben ist, ausgeführt sein. Zumindest ein MUT-Schallwandler kann als modifizierter MUT-Schallwandler, wie es im Zusammenhang mit Fig. 3 beschrieben ist, ausgeführt sein. Ein oder mehrere Schallwandler können beispielsweise an einem gemeinsamen Substrat, etwa eine Platine oder ein Siliziumsubstrat, angeordnet sein.

In anderen Worten können akustische Wandlervorrichtungen auch mehr als einen MUT-Schallwandler oder mehr als einen Piezo-Wandler umfassen. Ein oder mehrere Wandler können sowohl als Einzelelemente als auch als Array ausgeführt sein.

Die Fig. 8a-c und 9a-c zeigen versetzte Anordnungen beider Wandlertypen, wobei die Fig. 8a-c umschließende Konfigurationen und die Fig. 9a-c nebeneinander angeordnete Konfigurationen zeigen.

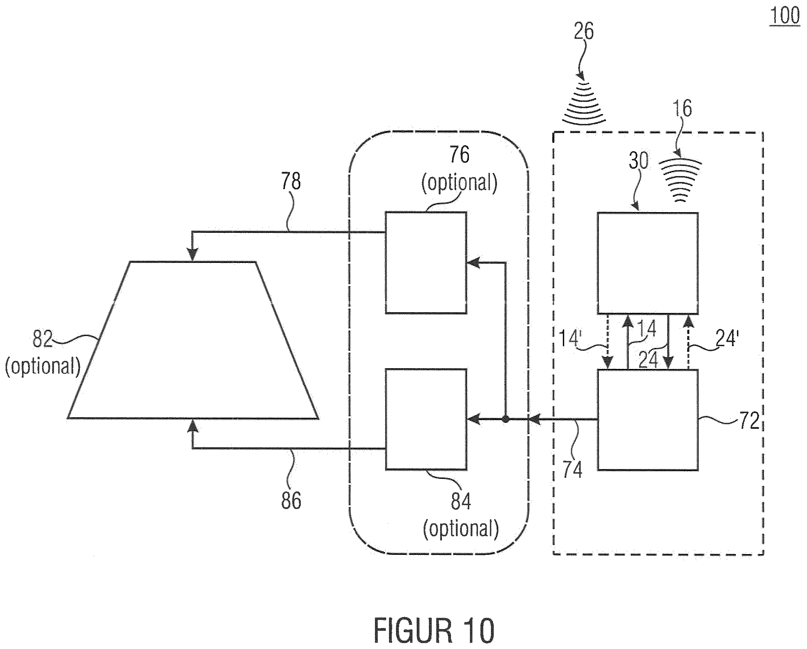

Fig. 10 zeigt ein schematisches Blockschaltbild eines akustischen Systems 100. Das akustische System 100 umfasst beispielsweise die akustische Wandlervorrichtung 30 und eine Steuervorrichtung 72. Die Steuervorrichtung 72 ist ausgebildet, um den Piezo-Schallwandler der Wandlervorrichtung 30 zu steuern. Beispielsweise ist die Steuervorrichtung 72 ausgebildet, um das Ansteuersignal 14 an die Wandlervorrichtung 30 zu liefern.

Die Steuervorrichtung 72 ist ferner ausgebildet, um ein Informationssignal 74 bereitzustellen. Das Informationssignal 74 kann eine Information, die sich auf den Erhalt der Schallwelle 26 bezieht aufweisen. Die Schallwelle 26 kann basierend auf einer Reflexion der Schallwelle 16 an einem Objekt erhalten werden. Basierend auf dem Eintreffen der Schalwelle 26 kann die Wandlervorrichtung 30 ausgebildet sein, um das Ausgangssignal 24 des MUT-Schallwandlers an die Steuervorrichtung 72 zu liefern.

Das akustische System 100 kann eine Verarbeitungsanordnung umfassen. Die Verarbeitungsanordnung kann ausgebildet sein, um das Informationssignal 74 von der Steuervorrichtung 72 zu erhalten. Die Verarbeitungseinrichtung kann einen optionalen Prozessor 76 umfassen, der ausgebildet ist, um diese Funktionalität bereitzustellen. Der Prozessor 76 bzw. die Verarbeitungsanordnung kann ausgebildet sein, um ein Bildsignal 78 aus dem Informationssignal 74 zu erzeugen. Das Bildsignal 78 kann als optisches Bild der empfangenen Schallwelle 26 darstellbar sein.

Das akustische System 100 kann ein optionales Anzeigeelement 82 aufweisen, das ausgebildet ist, um das Bildsignal 78 darzustellen. Dies kann ein bildgebendes akustisches Verfahren ermöglichen, beispielsweise eine Visualisierung eines Sonogramms.

Alternativ oder zusätzlich zu dem Prozessor 76 kann die Verarbeitungsanordnung einen optionalen Prozessor 84 umfassen. Die Verarbeitungsanordnung kann ausgebildet sein, um basierend auf dem Informationssignal Informationen bezüglich der Schallwelle 16 und/oder 26 zu bestimmen, etwa basierend auf einer Funktionalität des Prozessors 84. Beispielsweise kann es sich bei der Information um eine Richtung handeln, aus der die Schallwelle 26 von der Wandlervorrichtung 30 empfangen wird. Der Prozessor 84 bzw. die Verarbeitungsanordnung kann ausgebildet sein, um ein verarbeitetes Informationssignal 86, das auf dem Informationssignal 74 basiert, bereitzustellen. Der Prozessor 84 bzw. die Verarbeitungsanordnung kann ferner ausgebildet sein, um das verarbeitete Informationssignal 86 an das optionale Anzeigeelement 82 zu liefern.

Das optionale Anzeigeelement 82 kann ausgebildet sein, um die Information, die von dem optionalen Prozessor 84 bestimmt wurde, anzuzeigen. Dies kann beispielsweise grafisch und/oder in Textform erfolgen. Bei dem optionalen Anzeigeelement 82 kann es sich beispielsweise um ein Display, einen Monitor oder um eine akustische Anzeige handeln.

Alternativ oder zusätzlich zu der akustischen Wandlervorrichtung 30 kann das akustische System 100 auch zumindest eine andere oder weitere akustische Wandlervorrichtung 10, 20, 30, 40, 50, 70, 80 und/oder 90 umfassen.

Die akustische Wandlervorrichtung kann zumindest einen Piezo-Schallwandler 12 aufweisen, wobei die Steuervorrichtung 72 ausgebildet sein kann, um den Piezo-Schallwandler bzw. die Piezo-Schallwandlerelemente in einem ersten Zeitintervall so anzusteuern, dass die Schallwelle 16 in eine erste Richtung ausgesendet wird und, um den Piezo-Schallwandler bzw. die Piezo-Schallwandlerelemente in einem zweiten Zeitintervall so anzusteuern, dass die Schallwelle 16 in eine zweite Richtung ausgesendet wird, bspw. zur Implementierung einer Beamforming-Funktion.

Dies ermöglicht eine variable Abstrahlcharakteristik der akustischen Wandlervorrichtungen 30, wobei sich mechanische Komponenten des Systems in einem geringen oder in keinem Umfang bewegen. Dies kann so verstanden werden, dass ein Schwenken eines Prüfkopfes entfallen kann oder in einem geringen Umfang ausgeführt wird.

Die Steuervorrichtung 72 kann ausgebildet sein, um einen oder mehrere der Piezo-Schallwandler so anzusteuern, dass sich diese (und/oder Piezo-Schallwandlerelemente derselben) mit einer Frequenz bewegen, die im Wesentlichen einer mechanischen Resonanzfrequenz des MUT-Schallwandlers entspricht. Vereinfacht ausgedrückt kann die Steuervorrichtung 72 ausgebildet sein, um einen Piezo-Schallwandler 12 und/oder 12', an dem ein MUT-Schallwandler 22 und/oder 22' fest angeordnet ist, wie es im Zusammenhang mit den Fig. 1, 2, 3, 4 oder 5 beschrieben ist, mit einer Frequenz anzusteuern, die einer mechanischen Resonanzfrequenz des MUT-Schallwandlers entspricht. Die Steuervorrichtung 72 kann ausgebildet sein, um den Piezo-Schallwandler 12 bzw. 12' in etwa gleichphasig (Resonanz) oder gegenphasig (Antiresonanz) zu steuern. Bspw. kann eine Frequenz innerhalb eines Toleranzbereichs in einem Bereich von kleiner oder gleich ±10 %, kleiner oder gleich ±5 % oder kleiner oder gleich ±1 % der mechanischen Resonanzfrequenz des MUT-Wandlers 22 oder 22' im Wesentlichen der Resonanzfrequenz entsprechen.

Bei einer gleichphasigen Anregung kann dies ermöglichen, dass die Abstrahlung des Piezo-Schallwandlers durch den in Resonanz versetzten MUT-Schallwandler verstärkt wird. Mittels eines Betriebs des Piezo-Schallwandlers in Antiresonanz zu dem (ggf. nicht angesteuerten) MUT-Schallwandler kann eine Dämpfung der Schallwelle 16 erhalten werden, die zu einer Erhöhung der Bandbreite der Schallwelle 16 führt. Vereinfacht ausgedrückt kann auf Kosten der Amplitude und/oder des Schalldruckpegels der Schallwelle 16 eine Bandbreite, mit der diese ausgesendet wird, erhöht werden. Bei einem gleichphasigen Betrieb kann die Steuervorrichtung 72 ausgebildet sein, um die Anregung des Piezo-Schallwandlers so auszuführen, dass eine resonante Schwingung des MUT-Schallwandlers bzw. dessen schwingender Platte erhalten wird, so dass die Abstrahlung zusätzlich verstärkt wird. Die Interaktion beider Wandler kann auch ausgenutzt werden, um sich gegenseitig zu dämpfen (Antiresonanz). Dies kann beispielsweise eine höhere Bandbreite zur Folge haben.

Die Steuervorrichtung 72 kann ausgebildet sein, um das Informationssignal 74 alternativ oder zusätzlich basierend auf einem Ausgangssignal 14', das von dem Piezo- Schallwandler erhalten werden kann, bereitzustellen. Die Reziprozität des Piezo-Effektes ermöglicht eine Beeinflussung des Piezo-Schallwandlers 12 oder 12' basierend auf der Schallwelle 26, so dass ein entsprechendes Signal an Anschlüssen des Piezo-Schallwandlers erhalten werden kann. Bei diesen Anschlüssen kann es sich um dieselben Anschlüsse handeln, an denen das Signal 14 bereitgestellt wird.

In vergleichbarer Weise kann die Steuervorrichtung 72 ausgebildet sein, um den MUT-Schallwandler 22 bzw. 22' zum Aussenden der Schallwelle 16 mit anzuregen, etwa indem die Steuervorrichtung 22 bspw. ausgebildet ist, um dem MUT-Schallwandler 22 bzw. 22' ein Ansteuersignal 24' bereitzustellen. Das Ansteuersignal 24' kann gleichphasig zu dem Ansteuersignal 24 sein. Alternativ kann das Ansteuersignal 24' auch einen Phasenversatz zu dem Ansteuersignal 24 sein, etwa gegenphasig. Das bedeutet, dass die Steuervorrichtung 72 ausgebildet sein kann, um den Piezo-Schallwandler und den MUT-Schallwandler während eines Zeitintervalls gleichzeitig anzusteuern, so dass der Piezo-Schallwandler und der MUT-Schallwandler die Schallwelle 16 gleichzeitig erzeugen.

Der optionale Prozessor 76 und/oder der optionale Prozessor 84 der Verarbeitungsanordnung können beispielsweise als integrierte Schaltung, als feldprogrammierbares Gatterarray (FPGA) oder als Computerprozessor (CPU) oder als graphischer Prozessor (GPU) ausgeführt sein. Alternativ oder zusätzlich können die Prozessoren auch zumindest teilweise als Software ausgeführt sein. Ferner können die Prozessoren 76 und 84 als ein gemeinsamer Prozessor ausgeführt werden.

Alternativ können beide Schallwandler (Piezo-Schallwandler und MUT-Schallwandler) bei unterschiedlichen Frequenzen betrieben werden, so dass eine weitere Schallwelle neben der Schallwelle 16 ausgestrahlt wird. Reflexionen beider Wellen können von der akustischen Wandlervorrichtung 30 oder einer anderen, alternativ oder zusätzlich angeordneten akustische Wandlervorrichtung, empfangen werden. Basierend darauf kann das Informationssignal Informationen bezüglich zweier gesendeter und/oder empfangener Schallwellen aufweisen, so dass zwei unterschiedliche Ultraschallwandler in einem System realisiert werden können.

Ein Senden der Schallwelle 16 oder einer weiteren Schallwelle mittels des MUT-Schallwandlers oder eines MUT-Arrays ermöglicht eine Verstärkung der Schallwelle 16 und/oder einer Anpassung eines resultierenden Schallfeldes des Piezo-Schallwandlers. Der MUT-Schallwandler kann eine höhere Bandbreite einer ausgesendeten Schallwelle aufweisen, als ein Piezo-Schallwandler. Beispielsweise kann ein Piezo-Schallwandler eine Bandbreite in einem Bereich zwischen 60 % und 70 % der Mittenfrequenz (der Frequenz, mit der der Piezo-Schallwandler angesteuert wird) aufweisen. Ein MUT-Schallwandler kann eine Bandbreite in einem Bereich zwischen 100 % und 130 % der Mittenfrequenz aufweisen. Eine typische Mittenfrequenz kann in einem Bereich zwischen 1 MHz und 100 MHz, in einem Bereich zwischen 10 MHz und 50 MHz und/oder in einem Bereich zwischen 20 MHz und 40 MHz liegen. Prinzipiell sind beliebige Frequenzen einstellbar, d. h., ein System ist auf beliebige Frequenzen auslegbar und kann gemäß einer Auslegung realisiert werden. Durch ein paralleles Erzeugen von Schallwellen mit Piezo-Schallwandlern und MUT-Schallwandlern kann neben der hohen Effizienz des Piezo-Schallwandlers auch die in der Regel höhere Bandbreite des MUT-Schallwandlers ausgenutzt werden.

Eine Ansteuer- und/oder eine Ausleseelektronik, etwa die Steuervorrichtung 72, kann direkt an den MUT-Schallwandler angeordnet sein und/oder direkt in die akustische Wandlervorrichtung oder das akustische Wandlersystem integriert sein. Beispielsweise kann die Steuervorrichtung 72 als CMOS (CMOS = complementary metall oxide semiconductor, komplementäre Metalloxidhalbleiterstruktur) ausgeführt sein. Beispielsweise kann so eine MUT-on-CMOS-Struktur realisiert werden. Dies kann dazu führen, dass die Elektronik den Ultraschallwellen des Piezo-Schallwandlers ausgesetzt ist, etwa wenn eine akustische Wandlervorrichtung gemäß den Ausführungen im Zusammenhang mit den Fig. 1, 2, 3, 4 oder 5 realisiert wird. In anderen Worten ermöglicht die Integration der Ausleseelektronik auf CMOS-Basis direkt am Wandler selbst einen Erhalt eines hochqualitativen oder gar idealen (Ultra-)Schallempfängers.

Die mechanische und/oder akustische Kopplung des Piezo-Schallwandlers und des MUT-Schallwandlers ermöglicht eine wechselseitige Kalibrierung der eingesetzten Wandler. Beispielsweise kann eine Aktuierung des MUT-Schallwandlers oder des Piezo-Schallwandlers vom jeweiligen anderen Schallwandler abgetastet, d. h. sensiert, werden und mittels des Informationssignals 74 ausgewertet werden. Dies ermöglicht eine Anpassung der Signale 14, 14', 24 und/oder 24', um ein gewünschtes Verhalten der akustische Wandlervorrichtung und/oder des akustischen Systems zu erhalten.

Vorangehend beschriebene Ausführungsbeispiele beschreiben eine Kombination zweier unabhängiger Wandlertechnologien als System, als akustische Wandlervorrichtung. Dies unterscheidet sich zu einer Konfiguration als PMUT-Schallwandler für sich genommen.

Beispielsweise können Ausführungsbeispiele als Piezo-Schallwandler in Kombination mit einem PMUT-Schallwandler oder als Kombination eines Piezo-Schallwandlers und eines CMUT-Schallwandlers ausgeführt werden.

In anderen Worten umfasst eine Idee der vorliegenden Erfindung die Kombination von mikromaschinell gefertigten Ultraschallwandlern (MUT) zum Empfangen von Signalen und anderen Wandlertechnologien (beispielsweise PZT-Keramiken) zum Senden von Signalen.

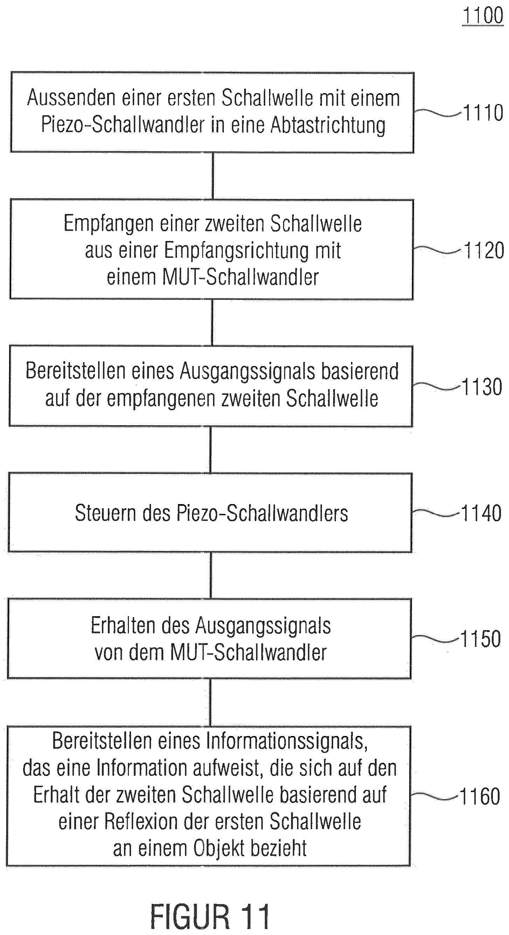

Fig. 11 zeigt ein schematisches Flussdiagramm eines Verfahrens 1100 zum Betrieb einer akustischen Wandlerstruktur, etwa der akustischen Wandlerstruktur 10, 20, 30, 40, 50, 70, 80 oder 90.

Ein Schritt 1110 umfasst ein Aussenden einer ersten Schallwelle mit einem Piezo-Schallwandler in eine Abtastrichtung. Ein Schritt 1120 umfasst ein Empfangen einer zweiten Schallwelle aus einer Empfangsrichtung mit einem MUT-Schallwandler. Ein Schritt 1130 umfasst ein Bereitstellen eines Ausgangssignals basierend auf der empfangenen zweiten Schallwelle.

Ein optionaler Schritt 1140 umfasst ein Steuern des Piezo-Schallwandlers. Ein optionaler Schritt 1150 umfasst ein Erhalten des Ausgangssignals von dem MUT-Schallwandler. Ein optionaler Schritt 1160 umfasst ein Bereitstellen eines Informationssignals, das eine Information aufweist, die sich auf den Erhalt der zweiten Schallwelle basierend auf einer Reflexion der ersten Schallwelle an einem Objekt bezieht. Die Schritte 1140, 1150 und/oder 1160 können beispielsweise ausgeführt werden, wenn die akustische Wandlervorrichtung mit einer Steuervorrichtung gekoppelt ist.

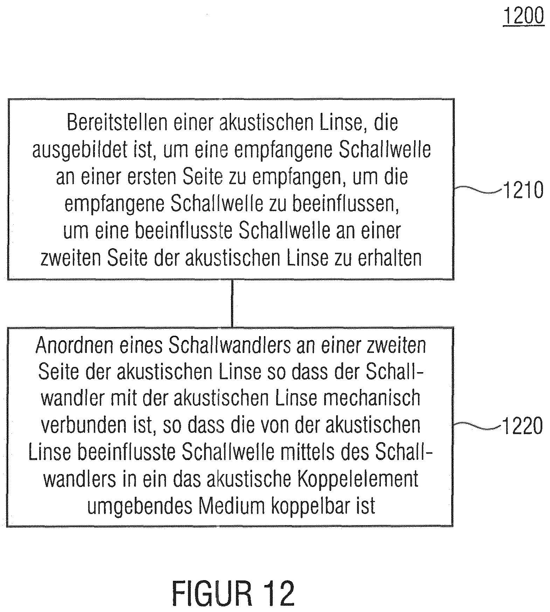

Fig. 12 zeigt ein schematisches Flussdiagramm eines Verfahrens 1200 zum Herstellen eines akustischen Koppelelementes. Das Verfahren 1200 umfasst einen Schritt 1210, in dem eine akustische Linse bereitgestellt wird, die ausgebildet ist, um eine empfangene Schallwelle an einer ersten Seite zu empfangen, um die empfangene Schallwelle zu beeinflussen, um eine beeinflusste Schallwelle an einer zweiten Seite der akustischen Linse zu erhalten. Ein Schritt 1220 umfasst ein Anordnen eines Schallwandlers an einer zweiten Seite der akustischen Linse, so dass der Schallwandler mit der akustischen Linse mechanisch verbunden ist, so dass die von der akustischen Linse beeinflusste Schallwelle mittels des Schallwandlers in ein das akustische Koppelelement umgebendes Medium koppelbar ist.

Obwohl sich manche der obigen Ausführungen auf die Anordnung von Schallwandlern beziehen und sich manche Ausführungsbeispiele auf eine Anordnung einer Mehrzahl von Schallwandlerelementen beiziehen, können diese obige Ausführungen beliebig wechselseitig vertauscht werden. Das bedeutet, dass Ausführungsbeispiele mit einem Piezo-Schallwandler 12 alternativ oder zusätzlich einen Piezo-Schallwandler 12' umfassen können und andersherum. Ausführungsbeispiele mit einem MUT-Schallwandler 22 können alternativ oder zusätzlich einen MUT-Schallwandler 22' umfassen und andersherum.

Obwohl manche Aspekte im Zusammenhang mit einer Vorrichtung beschrieben wurden, versteht es sich, dass diese Aspekte auch eine Beschreibung des entsprechenden Verfahrens darstellen, sodass ein Block oder ein Bauelement einer Vorrichtung auch als ein entsprechender Verfahrensschritt oder als ein Merkmal eines Verfahrensschrittes zu verstehen ist. Analog dazu stellen Aspekte, die im Zusammenhang mit einem oder als ein Verfahrensschritt beschrieben wurden, auch eine Beschreibung eines entsprechenden Blocks oder Details oder Merkmals einer entsprechenden Vorrichtung dar.

Je nach bestimmten Implementierungsanforderungen können Ausführungsbeispiele der Erfindung in Hardware oder in Software implementiert sein. Die Implementierung kann unter Verwendung eines digitalen Speichermediums, beispielsweise einer Floppy-Disk, einer DVD, einer Blu-ray Disc, einer CD, eines ROM, eines PROM, eines EPROM, eines EEPROM oder eines FLASH-Speichers, einer Festplatte oder eines anderen magnetischen oder optischen Speichers durchgeführt werden, auf dem elektronisch lesbare Steuersignale gespeichert sind, die mit einem programmierbaren Computersystem derart zusammenwirken können oder zusammenwirken, dass das jeweilige Verfahren durchgeführt wird. Deshalb kann das digitale Speichermedium computerlesbar sein. Manche Ausführungsbeispiele gemäß der Erfindung umfassen also einen Datenträger, der elektronisch lesbare Steuersignale aufweist, die in der Lage sind, mit einem programmierbaren Computersystem derart zusammenzuwirken, dass eines der hierin beschriebenen Verfahren durchgeführt wird.

Allgemein können Ausführungsbeispiele der vorliegenden Erfindung als Computerprogrammprodukt mit einem Programmcode implementiert sein, wobei der Programmcode dahin gehend wirksam ist, eines der Verfahren durchzuführen, wenn das Computerprogrammprodukt auf einem Computer abläuft. Der Programmcode kann beispielsweise auch auf einem maschinenlesbaren Träger gespeichert sein.

Andere Ausführungsbeispiele umfassen das Computerprogramm zum Durchführen eines der hierin beschriebenen Verfahren, wobei das Computerprogramm auf einem maschinenlesbaren Träger gespeichert ist.

Mit anderen Worten ist ein Ausführungsbeispiel des erfindungsgemäßen Verfahrens somit ein Computerprogramm, das einen Programmcode zum Durchführen eines der hierin beschriebenen Verfahren aufweist, wenn das Computerprogramm auf einem Computer abläuft. Ein weiteres Ausführungsbeispiel der erfindungsgemäßen Verfahren ist somit ein Datenträger (oder ein digitales Speichermedium oder ein computerlesbares Medium), auf dem das Computerprogramm zum Durchführen eines der hierin beschriebenen Verfahren aufgezeichnet ist.

Ein weiteres Ausführungsbeispiel des erfindungsgemäßen Verfahrens ist somit ein Datenstrom oder eine Sequenz von Signalen, der bzw. die das Computerprogramm zum Durchführen eines der hierin beschriebenen Verfahren darstellt bzw. darstellen. Der Datenstrom oder die Sequenz von Signalen kann bzw. können beispielsweise dahin gehend konfiguriert sein, über eine Datenkommunikationsverbindung, beispielsweise über das Internet, transferiert zu werden.

Ein weiteres Ausführungsbeispiel umfasst eine Verarbeitungseinrichtung, beispielsweise einen Computer oder ein programmierbares Logikbauelement, die dahin gehend konfiguriert oder angepasst ist, eines der hierin beschriebenen Verfahren durchzuführen.

Ein weiteres Ausführungsbeispiel umfasst einen Computer, auf dem das Computerprogramm zum Durchführen eines der hierin beschriebenen Verfahren installiert ist.

Bei manchen Ausführungsbeispielen kann ein programmierbares Logikbauelement (beispielsweise ein feldprogrammierbares Gatterarray, ein FPGA) dazu verwendet werden, manche oder alle Funktionalitäten der hierin beschriebenen Verfahren durchzuführen. Bei manchen Ausführungsbeispielen kann ein feldprogrammierbares Gatterarray mit einem Mikroprozessor zusammenwirken, um eines der hierin beschriebenen Verfahren durchzuführen. Allgemein werden die Verfahren bei einigen Ausführungsbeispielen seitens einer beliebigen Hardwarevorrichtung durchgeführt. Diese kann eine universell einsetzbare Hardware wie ein Computerprozessor (CPU), und/oder ein graphischer Prozessor (GPU) sein oder für das Verfahren spezifische Hardware, wie beispielsweise ein ASIC.

Die oben beschriebenen Ausführungsbeispiele stellen lediglich eine Veranschaulichung der Prinzipien der vorliegenden Erfindung dar. Es versteht sich, dass Modifikationen und Variationen der hierin beschriebenen Anordnungen und Einzelheiten anderen Fachleuten einleuchten werden. Deshalb ist beabsichtigt, dass die Erfindung lediglich durch den Schutzumfang der nachstehenden Patentansprüche und nicht durch die spezifischen Einzelheiten, die anhand der Beschreibung und der Erläuterung der Ausführungsbeispiele hierin präsentiert wurden, beschränkt sei.

### Literaturangaben

[1] Schuster, Lach, Platte "Die Qual der Wahl: Welcher Prüfkopf für welchen Einsatz?, 2004. In DACH Tagung, Sonderdruck SD 1/51 Salzburg
[2] Xiwei, H., Jia, H. C., Hyouk, K. C., Hongbin, Y., Minkyu, J., and Hao, Y., "A highfrequency transimpedance amplifier for CMOS integrated 2D CMUT array towards 3D ultrasound imaging," 2013. In Engineering in Medicine and Biology Society (EMBC), 2013 35th Annual International Conference of the IEEE, 101-04*.*
[3] Legros, M., Meynier, C., Dufait, R., Ferin, G., and Tranquart, F., "Piezocomposite and CMUT arrays assessment through in vitro imaging performances," 2008. In UItrasonics Symposium, 2008. IUS 2008. IEEE, 1142-45.
[4] Wygant, I., "A comparison of CMUTs and piezoelectric transducer elements for 2D medical imaging based on conventional simulation models," 2011. In Ultrasonics Symposium (IUS), 2011 IEEE International, 100-03*.*

## Patentansprüche

1. Akustische Wandlervorrichtung (10; 20; 30; 40; 50; 60; 70; 80; 90) mit folgenden Merkmalen:
einem Piezo-Schallwandler (12; 12'), der ausgebildet ist, um basierend auf einem Ansteuersignal (14) eine erste Schallwelle (16) in eine Abstrahlrichtung (18; 18') auszusenden; und
einem MUT-Schallwandler (22; 22'), der ausgebildet ist, um basierend auf einer zweiten, aus einer Empfangsrichtung (28; 28') empfangenen Schallwelle (26) ein Ausgangssignal (24) bereitzustellen; **dadurch gekennzeichnet,**
**dass** eine Innenabmessung des MUT-Schallwandlers (12) größer ist als eine Außenabmessung des Piezo-Schallwandlers (22); wobei der Piezo-Schallwandler (12; 12') und der MUT-Schallwandler (22; 22') so angeordnet sind, dass der MUT-Schallwandler (22; 22') den Piezo-Schallwandler (12; 12') umschließt, wenn ein Ort des Piezo-Schallwandlers (12; 12') und ein Ort des MUT-Schallwandler (22; 22') in eine Ebene (y-z) projiziert werden.

2. Akustische Wandlervorrichtung gemäß Anspruch 1, bei der der MUT-Schallwandler (22; 22') entlang der Abstrahlrichtung (18; 18') des Piezo-Schallwandlers (12; 12') angeordnet ist.

3. Akustische Wandlervorrichtung gemäß einem der vorangehenden Ansprüche, die das akustische Koppelelement (44) umfasst, das ausgebildet ist, um den Piezo-Schallwandler (12; 12') und den MUT-Schallwandler (22; 22') akustisch zu koppeln.

4. Akustische Wandlervorrichtung gemäß Anspruch 3, bei der das akustische Koppelelement (44) eine akustische Linse ist, die ausgebildet ist, um eine Ausbreitung der ersten Schallwelle (16) zu beeinflussen, wobei der MUT-Schallwandler (22; 22') mit der akustischen Linse mechanisch verbunden ist, so dass die von dem Piezo-Schallwandler (12; 12') ausgesendete und von der akustischen Linse beeinflusste erste Schallwelle (16) auf den MUT-Schallwandler (22; 22') trifft und von dem MUT-Schallwandler (22; 22') in ein Medium gekoppelt wird.

5. Akustisches System (100) mit:
einer akustischen Wandlervorrichtung (10; 20; 30; 40; 50; 60; 70) gemäß einem der vorangehenden Ansprüche;
einer Steuervorrichtung (72), die ausgebildet ist, um den Piezo-Schallwandler (12; 12') der Wandlervorrichtung (10; 20; 30; 40; 50; 60; 70) zu steuern, um von dem MUT-Schallwandler (22; 22') das Ausgangssignal (24) zu erhalten und um ein Informationssignal (74) bereitzustellen, das eine Information aufweist, die sich auf den Erhalt der zweiten Schallwelle (26) basierend auf einer Reflexion der ersten Schallwelle (16) an einem Objekt (32) bezieht.

6. Verfahren (1100) zum Betrieb einer akustischen Wandlerstruktur (10; 20; 30; 40; 50; 60; 70) umfassend einen Piezo-Schallwandler (12; 12'), einem MUT-Schallwandler, wobei eine Innenabmessung des MUT-Schallwandlers (12) ist größer als eine Außenabmessung des Piezo-Schallwandlers (22) mit folgenden Schritten:
Aussenden (1110) einer ersten Schallwelle (16) mit einem Piezo-Schallwandler (12; 12') in eine Abstrahlrichtung (18; 18'); **dadurch gekennzeichnet, dass** das Verfahren aufweist:
Empfangen (1120) einer zweiten Schallwelle (26) aus einer Empfangsrichtung (28; 28') mit einem MUT-Schallwandler (22; 22'), wobei der Piezo-Schallwandler (12; 12') und der MUT-Schallwandler (22; 22') so angeordnet sind, dass der MUT-Schallwandler (22; 22') den Piezo-Schallwandler (12; 12') umschließt, wenn ein Ort des Piezo-Schallwandlers (12; 12') und ein Ort des MUT-Schallwandler (22; 22') in eine Ebene (y-z) projiziert werden; und
Bereitstellen (1130) eines Ausgangssignals (24) basierend auf der empfangenen zweiten Schallwelle (26).

## Claims

1. An acoustic transducer device (10; 20; 30; 40; 50; 60; 70; 80; 90) comprising:
a piezo sound transducer (12; 12') configured to emit a first sound wave (16) in a radiation direction (18; 18') on the basis of a control signal (14); and
an MUT sound transducer (22; 22') configured to provide an output signal (24) on the basis of a second sound wave (26) received from a receive direction (28; 28'); **characterized in that**
an inner dimension of the MUT sound transducer (12) is greater than an outer dimension of the piezo sound transducer (22); wherein the piezo sound transducer (12; 12') and the MUT sound transducer (22; 22') are arranged such that the MUT sound transducer (22; 22') encloses the piezo sound transducer (12; 12') when a location of the piezo sound transducer (12; 12') and a location of the MUT sound transducer (22; 22') are projected into a plane (y-z).

2. The acoustic transducer device as claimed in claim 1, wherein the MUT sound transducer (22; 22') is arranged along the radiation direction (18; 18') of the piezo sound transducer (12; 12').

3. The acoustic transducer device as claimed in any of the previous claims, comprising the acoustic coupling element (44) configured to acoustically couple the piezo sound transducer (12; 12') and the MUT sound transducer (22; 22').

4. The acoustic transducer device as claimed in claim 3, wherein the acoustic coupling element (44) is an acoustic lens configured to influence propagation of the first sound wave (16), the MUT sound transducer (22; 22') being mechanically connected to the acoustic lens, so that the first sound wave (16) emitted by the piezo sound transducer (12; 12') and influenced by the acoustic lens impinges on the MUT sound transducer (22; 22') and is coupled into a medium by the MUT sound transducer (22; 22').

5. An acoustic system (100) comprising:
an acoustic transducer device (10; 20; 30; 40; 50; 60; 70) as claimed in any of the previous claims;
a control device (70) configured to control the piezo sound transducer (12; 12') of the transducer device (10; 20; 30; 40; 50; 60; 70) so as to obtain the output signal (24) from the MUT sound transducer (22; 22') and so as to provide an information signal (74) comprising information which relates to obtaining the second sound wave (26) on the basis of a reflection of the first sound wave (16) at an object (32).

6. A method (1100) of operating an acoustic transducer structure (10; 20; 30; 40; 50; 60; 70) comprising a piezo sound transducer (12; 12'), an MUT sound transducer, wherein an inner dimension of the MUT sound transducer (12) is greater than an outer dimension of the piezo sound transducer (22), the method comprising:
emitting (1110) a first sound wave (16) in a radiation direction (18; 18') with a piezo sound transducer (12; 12'); **characterized in that** the method comprises:
receiving (1120) a second sound wave (26) from a receive direction (28; 28') with an MUT sound transducer (22; 22'), wherein the piezo sound transducer (12; 12') and the MUT sound transducer (22; 22') are arranged such that the MUT sound transducer (22; 22') encloses the piezo sound transducer (12; 12') when a location of the piezo sound transducer (12; 12') and a location of the MUT sound transducer (22; 22') are projected into a plane (y-z); and
providing (1130) an output signal (24) on the basis of the received second sound wave (26).

## Revendications

1. Dispositif de transduction acoustique (10; 20; 30; 40; 50; 60; 70; 80; 90) comprenant :
un transducteur acoustique piézoélectrique (12; 12'), configuré pour émettre, à partir d'un signal de commande (14), une première onde acoustique (16) dans une direction d'émission (18; 18') ; et
un transducteur acoustique MUT (22; 22'), configuré pour fournir un signal de sortie (24) à partir d'une seconde onde acoustique (26) reçue selon une direction de réception (28; 28') ; **caractérisé en ce que**
la dimension intérieure du transducteur acoustique MUT (12) est supérieure à la dimension extérieure du transducteur acoustique piézoélectrique (22) ; le transducteur acoustique piézoélectrique (12; 12') et le transducteur acoustique MUT (22; 22') étant disposés de telle sorte que le transducteur acoustique MUT (22; 22') entoure le transducteur acoustique piézoélectrique (12; 12') lorsque l'emplacement du transducteur acoustique piézoélectrique (12; 12') et celui du transducteur acoustique MUT (22; 22') sont projetés dans un plan (y-z).

2. Dispositif de transduction acoustique selon la revendication 1, dans lequel le transducteur acoustique MUT (22; 22') est disposé le long de la direction d'émission (18; 18') du transducteur acoustique piézoélectrique (12; 12').

3. Dispositif de transduction acoustique selon l'une quelconque des revendications précédentes, comprenant un élément de couplage acoustique (44), configuré pour assurer un couplage acoustique entre le transducteur acoustique piézoélectrique (12; 12') et le transducteur acoustique MUT (22; 22').

4. Dispositif de transduction acoustique selon la revendication 3, dans lequel l'élément de couplage acoustique (44) est une lentille acoustique, configurée pour influer sur la propagation de la première onde acoustique (16), le transducteur acoustique MUT (22; 22') étant relié mécaniquement à la lentille acoustique, de sorte que la première onde acoustique (16), émise par le transducteur acoustique piézoélectrique (12; 12') et influencée par la lentille acoustique, atteint le transducteur acoustique MUT (22; 22') et est couplée par le transducteur acoustique MUT (22; 22') dans un milieu.

5. Système acoustique (100) comprenant :
un dispositif de transduction acoustique (10; 20; 30; 40; 50; 60; 70) selon l'une quelconque des revendications précédentes ;
un dispositif de commande (72), configuré pour commander le transducteur acoustique piézoélectrique (12; 12') du dispositif de transduction acoustique (10; 20; 30; 40; 50; 60; 70) afin d'obtenir, à partir du transducteur acoustique MUT (22; 22'), le signal de sortie (24) et de fournir un signal d'information (74) comportant une information relative à la réception de la seconde onde acoustique (26) à partir d'une réflexion de la première onde acoustique (16) sur un objet (32).

6. Procédé (1100) de fonctionnement d'une structure de transduction acoustique (10; 20; 30; 40; 50; 60; 70) comprenant un transducteur acoustique piézoélectrique (12; 12') et un transducteur acoustique MUT, la dimension intérieure du transducteur acoustique MUT (12) étant supérieure à la dimension extérieure du transducteur acoustique piézoélectrique (22), le procédé comprenant les étapes suivantes :
émission (1110) d'une première onde acoustique (16) au moyen d'un transducteur acoustique piézoélectrique (12; 12') dans une direction d'émission (18; 18') ; **caractérisé en ce que** le procédé comprend :
réception (1120) d'une seconde onde acoustique (26) reçue selon une direction de réception (28; 28') au moyen d'un transducteur acoustique MUT (22; 22'), le transducteur acoustique piézoélectrique (12; 12') et le transducteur acoustique MUT (22; 22') étant disposés de telle sorte que le transducteur acoustique MUT (22; 22') entoure le transducteur acoustique piézoélectrique (12; 12') lorsque l'emplacement du transducteur acoustique piézoélectrique (12; 12') et celui du transducteur acoustique MUT (22; 22') sont projetés dans un plan (y-z) ; et
fourniture (1130) d'un signal de sortie (24) à partir de la seconde onde acoustique (26) reçue.
